# EUROPEAN PATENT APPLICATION

(11) **EP 2 613 267 A1**
(43) Date of publication of application: **10.07.2013**
(21) Application number: 11821583.9
(22) Date of filing: 22.08.2011
(51) Int. Cl.: G06F 13/00, G06F 12/00, H04N 7/173

(54) **RECEPTION DEVICE, RECEPTION METHOD, TRANSMISSION DEVICE, TRANSMISSION METHOD, PROGRAM, AND BROADCAST SYSTEM**

(30) Priority: 06.04.2011 US 201113080866; 15.09.2010 US 383244 P; 30.08.2010 US 378239 P
(71) Applicant: Sony Corporation, Tokyo 108-0075 (JP)
(72) Inventor: KITAZATO Naohisa, Tokyo 108-0075 (JP); DEWA Yoshiharu, Tokyo 108-0075 (JP); YAMAGISHI Yasuaki, Tokyo 108-0075 (JP)
(74) Representative: Horner, David Richard
(86) International application number: PCT/JP2011/068835
(87) International publication number: WO 2012/029566

(57) **Abstract**

The present invention relates to a reception apparatus, a reception method, a transmission apparatus, a transmission method, a program, and a broadcasting system wherein a file of an acquisition target can be acquired using the same namespace irrespective of an acquisition destination of the file.

An application controlling section 90 determines an acquisition destination from which a file to be acquired by a reception apparatus 60 is to be acquired in accordance with an order determined in advance from among a plurality of storage media in which the file is stored. An application engine 91 acquires the file from the acquisition destination based on the same file acquisition information which is file acquisition information for use for acquiring the file in the storage medium and is common to the plural storage media, and executes the acquired file. The present invention can be applied to a reception apparatus and so forth wherein, for example, AV content is received and data broadcasting content is displayed in an interlocked relationship with the progress of the AV content.

## Description

### [Technical Field]

The present invention relates to a reception apparatus, a reception method, a transmission apparatus, a transmission method, a program, and a broadcasting system. Particularly, the present invention relates to a reception apparatus, a reception method, a transmission apparatus, a transmission method, a program, and a broadcasting system wherein, irrespective of an acquisition destination of a file, the same file can be acquired using a namespace indicative of a storage place of a file commonly.

### [Background Art]

Conventionally, for example, in order to acquire (read out) a file from a recording medium such as a hard disk built in a computer, it is necessary to designate a file of an acquisition target from among a plurality of files stored in the recording medium. A file of an acquisition target is designated, for example, by a namespace "file://<directory_name>/<file_name>" which indicates a storage place of the file in the form of a character string.

On the other hand, for example, in the case where a file is to be acquired from a server connected to the Internet, it is necessary to designate a file of an acquisition target from among a plurality of files recorded in the server. A file of an acquisition target is designated, for example, by a namespace "file://<domain_name>/<file_name>."

Further, for example, in the case where a file is to be acquired from a digital television broadcasting signal broadcast, for example, by a digital television broadcast, it is necessary to designate a file of an acquisition target from among a plurality of files placed in the digital television broadcasting signal. A file of an acquisition target is designated, for example, by a namespace
"arib://<network_id>.<org_ts_id>.<service_id>/<component_ tag>/<module_id>/<file_name>."

As described above, it is conventionally necessary to use a different namespace in response to an acquisition destination of a file, which is very cumbersome.

Therefore, a file ID reference technique has been proposed wherein, for each of different namespaces, a file ID for uniquely identifying the namespace is associated such that, irrespective of an acquisition destination of the file, the file can be designated only by the file ID (refer to, for example, Patent Literature 1).

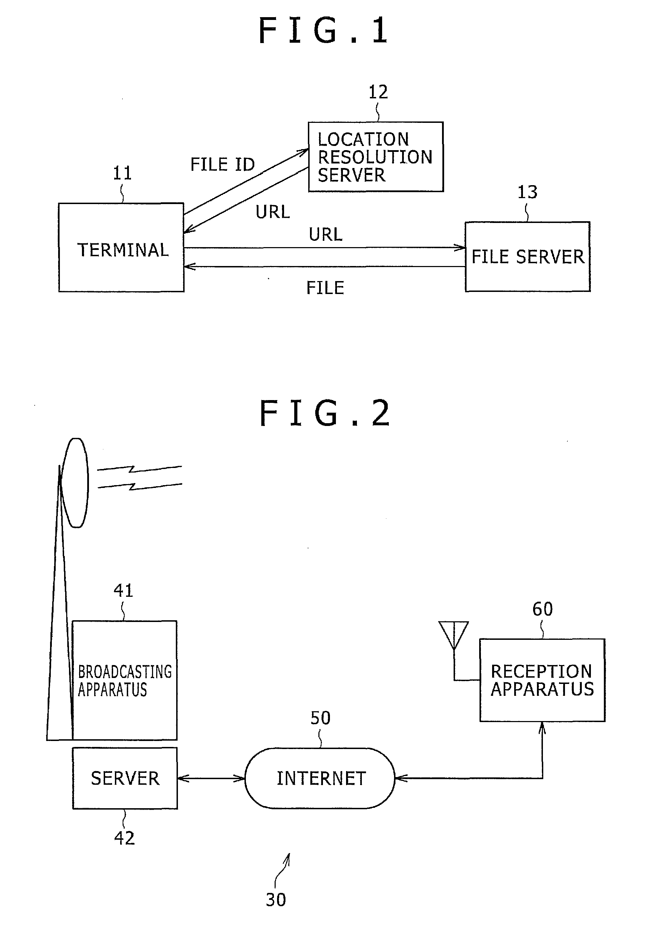

In this file ID reference technique, if, for example, as shown in FIG. 1, a file ID corresponding to a namespace of a file stored in a file server 13 is designated by a terminal 11, then the terminal 11 requests a location resolution server 12 to notify the terminal 11 of a namespace corresponding to the file ID.

Thus, in response to the request from the terminal 11, the location resolution server 12 notifies the terminal 11 of a namespace of the file stored in the file server 13. The terminal 11 uses the notified namespace to acquire the file from the file server 13. It is to be noted that it is assumed that the location resolution server 12 retains, for each file ID, a corresponding namespace in an associated relationship with the file ID.

### [Citation list]

### [Patent Literature]

[PTL1]
   JP2002-229881A

### [Summary]

### [Technical Problem]

In the file ID reference technique, although the terminal 11 can designate a file only based on a file ID irrespective of an acquisition destination of the file, when the file of the acquisition target is to be acquired, such a complicated process as to access the location resolution server 12 must be carried out without fail. Therefore, a communication system configured from the terminal 11 to the file server 13 is complicated in operation.

The present invention has been made in view of such a situation as described above and makes it possible to acquire a file of an acquisition target using the same namespace irrespective of an acquisition destination of the file without carrying out a complicated process.

### [Solution to Problem]

According to a first aspect of the present invention, there is provided a reception apparatus which receives data, including determination means for determining an acquisition destination from which a file to be acquired by the reception apparatus is to be acquired in accordance with an order determined in advance from among a plurality of storage media in which the file is stored, acquisition means for acquiring the file from the acquisition destination based on the same file acquisition information which is file acquisition information for use for acquiring the file in the storage medium and is common to the plural storage media, and execution means for executing the acquired file.

The reception apparatus can be configured such that the determination means newly determines an acquisition destination in accordance with the order in response to failure in acquisition of the file from the acquisition destination by the acquisition means.

The reception apparatus can be configured such that the determination means determines the acquisition destination in accordance with the order in which a priority rank of a server which is connected through a network to the reception apparatus and is the acquisition destination is lower than that of any other storage medium from among the plural storage media which include at least the server as the storage medium.

The reception apparatus can be configured such that the determination means determines the acquisition destination in accordance with the order in which a priority rank of an accumulation storage section which the reception apparatus has and which has the file accumulated therein already and is the acquisition destination is higher than that of any other storage medium from among the plural storage media which include at least the accumulation storage section as the storage medium.

The reception apparatus can be configured such that the determination means determines the acquisition destination from among the plural storage media based on acquisition destination information which indicates the acquisition destination.

The reception apparatus can be configured such that the acquisition means acquires the file from the acquisition destination based on the file acquisition information which is configured at least from content identification information for identifying content configured from the file and file identification information for identifying the file managed for each piece of the content.

The reception apparatus can be configured such that the acquisition means acquires content, which is configured from the file, from the acquisition destination based on the file acquisition information configured at least from content identification information for identifying the content, and acquires the file to be executed from the acquired content.

The reception apparatus can be configured such that the plural storage media include a server connected through a network to the reception apparatus as the storage medium, and the acquisition means acquires the file from the acquisition destination using a URL (Uniform Resource Locator) indicating a position of the file stored in the server as the file acquisition information.

The reception apparatus can be configured such that it further includes extraction means for extracting a trigger signal which includes at least acquisition destination information indicative of the acquisition destination and the file acquisition information from AV content, and that the determination means determines the acquisition destination from among the plural storage media based on the acquisition destination information included in the extracted trigger signal, and the acquisition means acquires the file from the acquisition destination based on the file acquisition information included in the extracted trigger signal.

The reception apparatus can be configured such that it further includes extraction means for extracting, from a program which is executed when the file is to be acquired and in which acquisition destination information indicative of the acquisition destination and the file acquisition information are described, the acquisition destination information and the file acquisition information, and that the determination means determines the acquisition destination from among the plural storage media based on the extracted acquisition destination information, and the acquisition means acquires the file from the acquisition destination based on the extracted file acquisition information.

The reception apparatus can be configured such that the determination means determines, as a file to be acquired by the reception apparatus which receives AV content, an acquisition destination from which the file is to be acquired in accordance with the order determined in advance from among the plural storage media which store a file to be executed in a linked relationship with progress of the AV content.

According to the first aspect of the present invention, there is provided a reception method for a reception apparatus which receives data, including steps executed by the reception apparatus and including a decision step of determining an acquisition destination from which a file to be acquired by the reception apparatus is to be acquired in accordance with an order determined in advance from among a plurality of storage media in which the file is stored, an acquisition step of acquiring the file from the acquisition destination based on the same file acquisition information which is file acquisition information for use for acquiring the file in the storage medium and is common to the plural storage media, and an execution step of executing the acquired file.

According to the first aspect of the present invention, there is further provided a program for causing a computer for controlling a reception apparatus for receiving data to function as determination means for determining an acquisition destination from which a file to be acquired by the reception apparatus is to be acquired in accordance with an order determined in advance from among a plurality of storage media in which the file is stored, acquisition means for acquiring the file from the acquisition destination based on the same file acquisition information which is file acquisition information for use for acquiring the file in the storage medium and is common to the plural storage media, and execution means for executing the acquired file.

According to the first aspect of the present invention, an acquisition destination from which a file to be acquired by the reception apparatus is to be acquired is determined in accordance with an order determined in advance from among a plurality of storage media in which the file is stored. Then, the file is acquired from the acquisition destination based on the same file acquisition information which is file acquisition information for use for acquiring the file in the storage medium and is common to the plural storage media. Then, the acquired file is executed.

According to a second aspect of the present invention, there is provided a transmission apparatus which transmits AV content, including transmission means for placing and transmitting a trigger signal relating to a file to be executed by a reception apparatus into and together with the AV content in a linked relationship with the progress of the AV content, and wherein the trigger signal includes at least acquisition destination information indicative of an acquisition destination from which the file is to be acquired from among a plurality of storage media which store the file therein and the same file acquisition information which is used for acquiring the file in the storage medium and is common to the plural storage media.

The transmission apparatus can be configured such that the trigger signal includes the file acquisition information configured at least from content identification information for identifying content configured from the file and the acquisition destination information.

The transmission apparatus can be configured such that the trigger signal includes the file acquisition information configured at least from content identification information for identifying content configured from the file and file identification information for identifying the file managed for each piece of the content and the acquisition destination information.

The transmission apparatus can be configured such that the plural storage media include a server connected through a network to the reception apparatus as the storage medium, and the trigger signal includes a URL which indicates a position of the file stored in the server as the file acquisition information.

According to the second aspect of the present invention, there is provided a transmission method for a transmission apparatus which transmits AV content, including steps executed by the transmission apparatus and including a transmission step of placing and transmitting a trigger signal relating to a file to be executed by a reception apparatus into and together with the AV content in a linked relationship with the progress of the AV content, and wherein the trigger signal includes at least acquisition destination information indicative of an acquisition destination from which the file is to be acquired from among a plurality of storage media which store the file therein and the same file acquisition information which is used for acquiring the file in the storage medium and is common to the plural storage media.

According to the second aspect of the present invention, there is further provided a program for causing a computer which controls a transmission apparatus which transmits AV content to function as transmission means for placing and transmitting a trigger signal relating to a file to be executed by a reception apparatus into and together with the AV content in a linked relationship with the progress of the AV content, and wherein the trigger signal includes at least acquisition destination information indicative of an acquisition destination from which the file is to be acquired from among a plurality of storage media which store the file therein and the same file acquisition information which is used for acquiring the file in the storage medium and is common to the plural storage media.

According to the second aspect of the present invention, a trigger signal relating to a file to be executed by a reception apparatus is placed into and transmitted together with AV content in a linked relationship with the progress of the AV content. It is to be noted that the trigger signal includes at least acquisition destination information indicative of an acquisition destination from which the file is to be acquired from among a plurality of storage media which store the file therein and the same file acquisition information which is used for acquiring the file in the storage medium and is common to the plural storage media.

According to a third aspect of the present invention, there is provided a broadcasting system configured from a transmission apparatus for transmitting AV content and a reception apparatus for receiving the transmitted AV content, wherein the transmission apparatus includes transmission means for placing and transmitting a trigger signal relating to a file to be executed by a reception apparatus into and together with the AV content in a linked relationship with the progress of the AV content and wherein the trigger signal includes at least acquisition destination information indicative of an acquisition destination from which the file is to be acquired from among a plurality of storage media which store the file therein and the same file acquisition information which is used for acquiring the file in the storage medium and is common to the plural storage media, and the reception apparatus includes extraction means for extracting the trigger signal which includes at least the acquisition destination information and the file acquisition information from within the AV content, determination means for determining the acquisition destination from among the plural storage media based on the acquisition destination information included in the extracted trigger signal, acquisition means for acquiring the file from the acquisition destination based on the file acquisition information included in the extracted trigger signal, and execution means for executing the acquired file.

According to the third aspect of the present invention, a trigger signal relating to a file to be executed by a reception apparatus is placed into and transmitted together with AV content in a linked relationship with the progress of the AV content by the transmission apparatus. The trigger signal includes at least acquisition destination information indicative of an acquisition destination from which the file is to be acquired from among a plurality of storage media which store the file therein and the same file acquisition information which is used for acquiring the file in the storage medium and is common to the plural storage media. Further, the trigger signal which includes at least the acquisition destination information and the file acquisition information is extracted from within the AV content by the reception apparatus. Further, the acquisition destination is determined from among the plural storage media based on the acquisition destination information included in the extracted trigger signal, and the file is acquired from the acquisition destination based on the file acquisition information included in the extracted trigger signal. Then, the acquired file is executed.

### [Advantageous Effects of Invention]

According to the present invention, it is possible to easily acquire a file of an acquisition target using the same namespace irrespective of an acquisition destination of the file without carrying out a complicated process.

Further, according to the present invention, it is possible to cause a file of an acquisition target to be acquired easily using the same namespace irrespective of an acquisition destination of the file without carrying out a complicated process.

### [Brief Description of Drawings]

[FIG. 1]
   FIG. 1 is a block diagram showing an example in the case where a conventional location resolution server is used.
[FIG. 2]
   FIG. 2 is a block diagram showing examples of a configuration of a broadcasting system according to a first embodiment.
[FIG. 3]

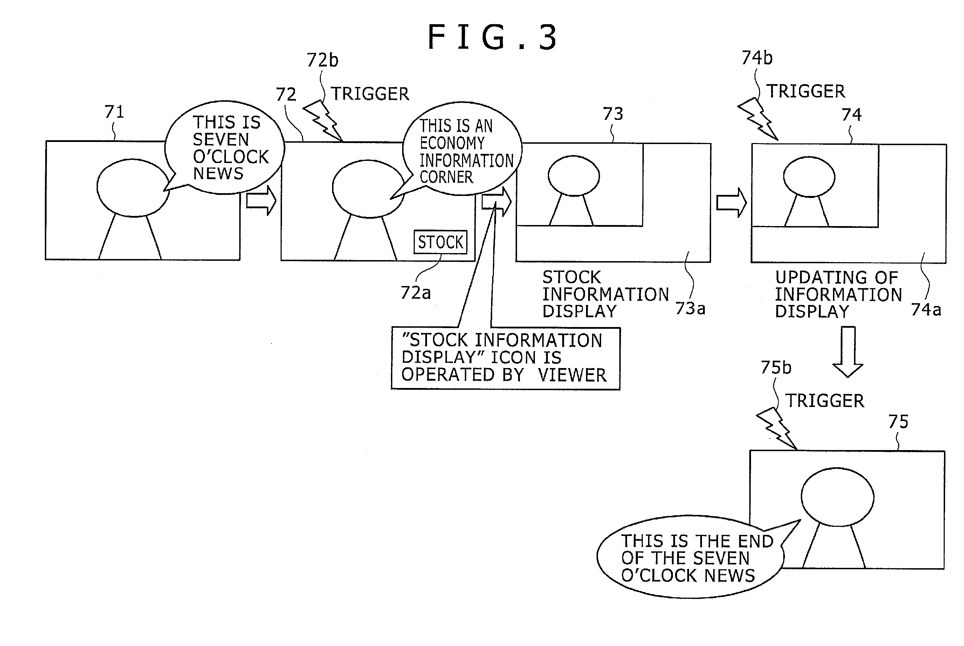

   FIG. 3 is a view showing an example of a display image of data broadcasting content.
[FIG. 4]

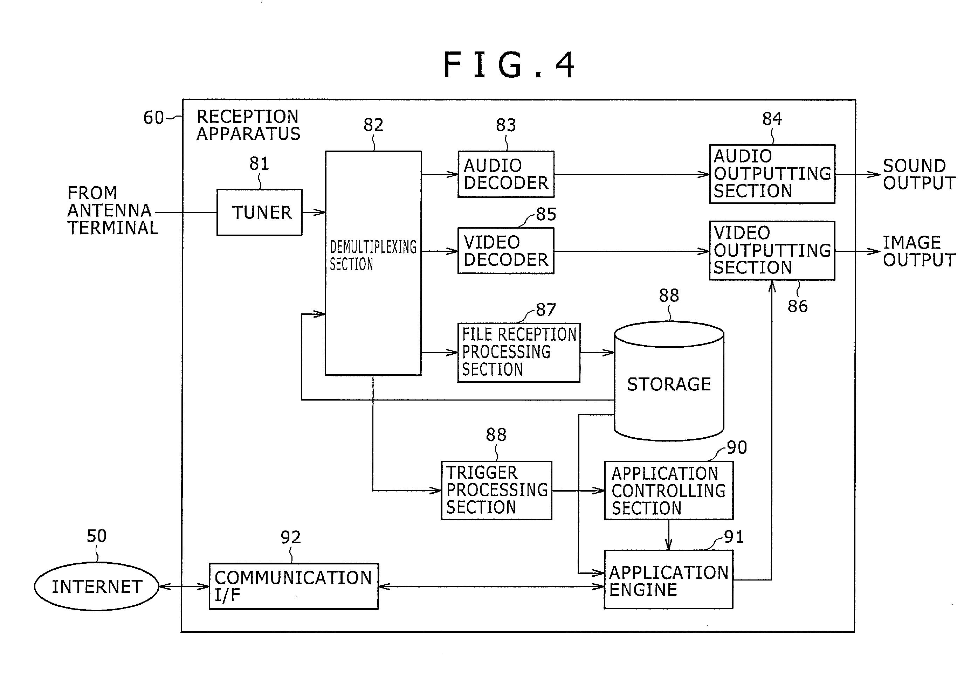

   FIG. 4 is a block diagram showing an example of a configuration of a reception apparatus.
[FIG. 5]

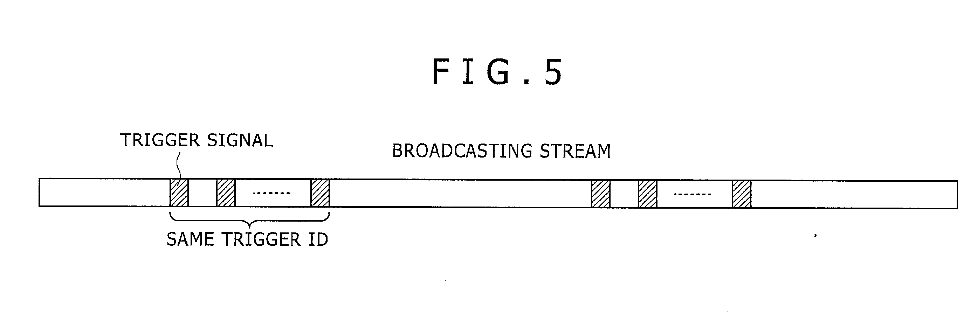

   FIG. 5 is a view illustrating a concept in the case where a trigger signal is placed in and transmitted together with a PCR packet of a TS.
[FIG. 6]

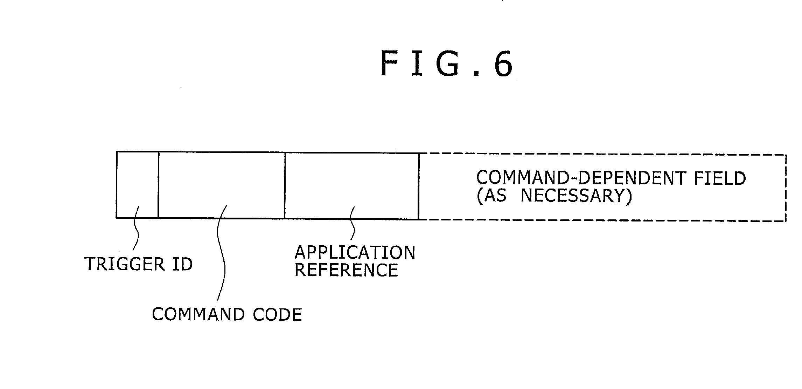

   FIG. 6 is a view illustrating an example of a configuration of the trigger signal.
[FIG. 7]

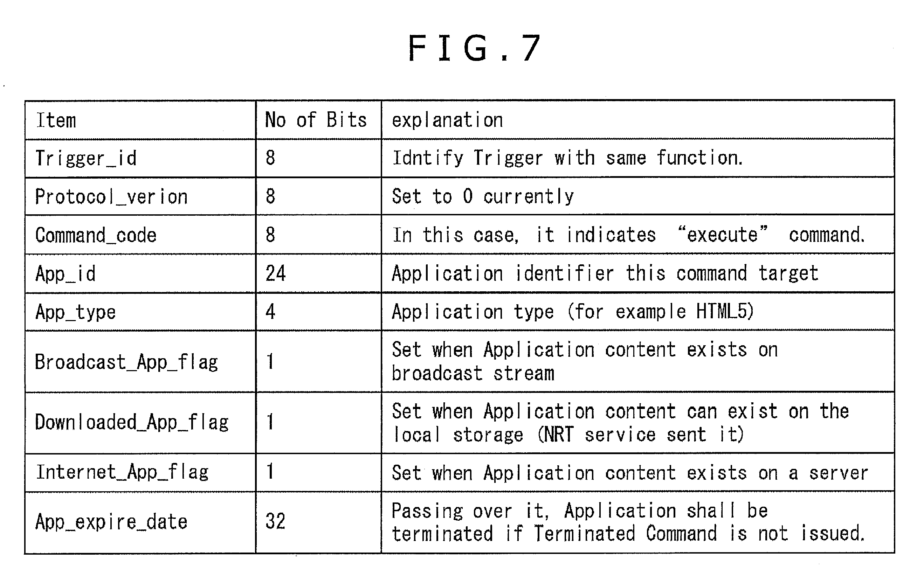

   FIG. 7 is a view illustrating an example of items included in the trigger signal in the case where a command code is start-up of an application.
[FIG. 8]

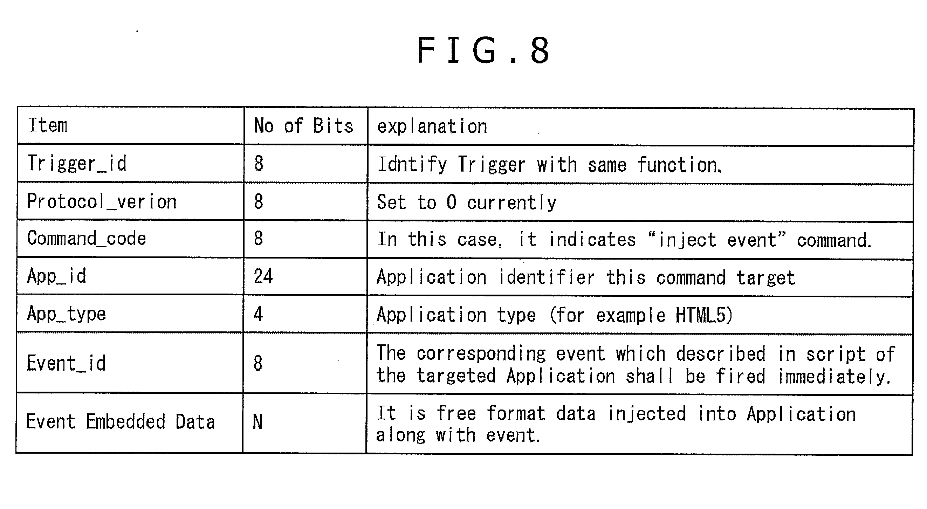

   FIG. 8 is a view illustrating an example of items included in the trigger signal in the case where the command code is application event.
[FIG. 9]

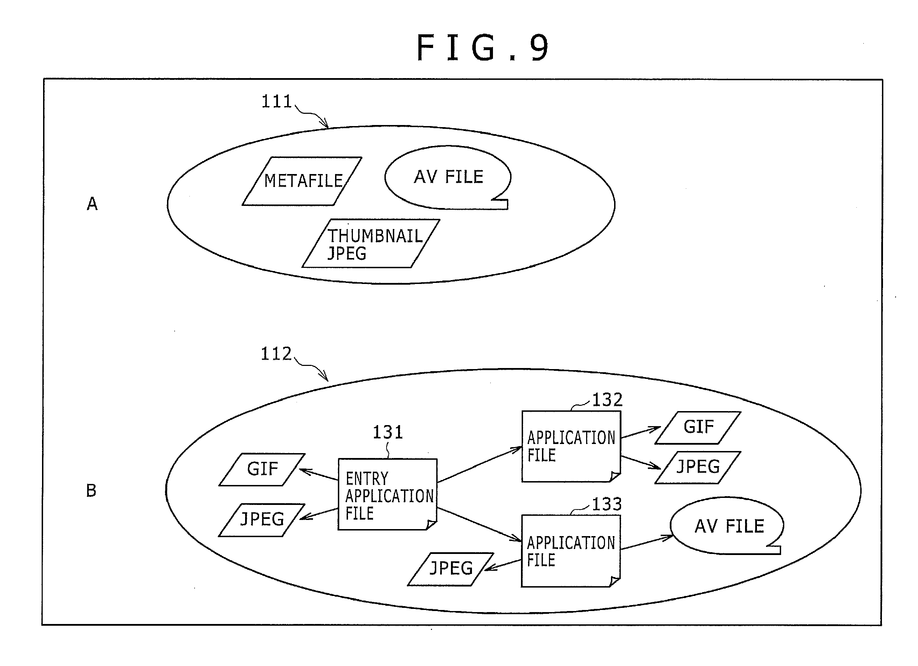

   FIG. 9 is views illustrating an example of AV content and data broadcasting content.
[FIG. 10]

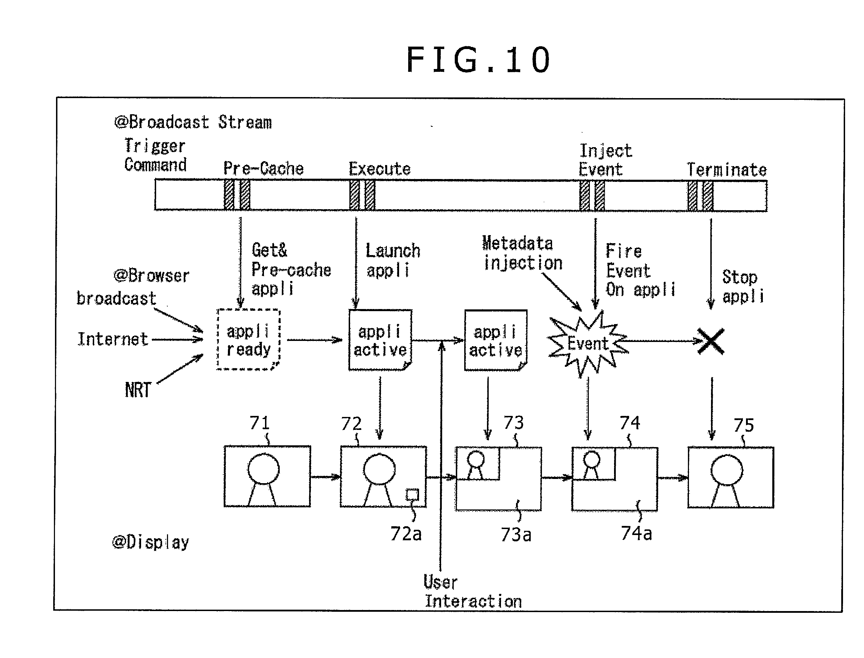

   FIG. 10 is a view illustrating an example in the case where a screen display image is changed based on the trigger signal.
[FIG. 11]

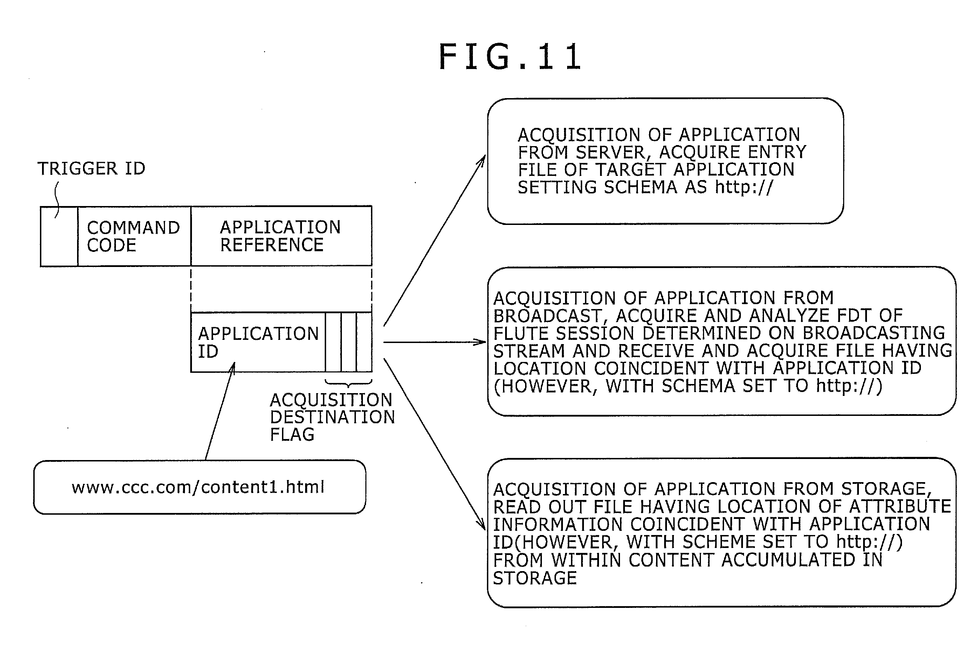

   FIG. 11 is a view illustrating an example of items included in application reference of the trigger signal.
[FIG. 12]

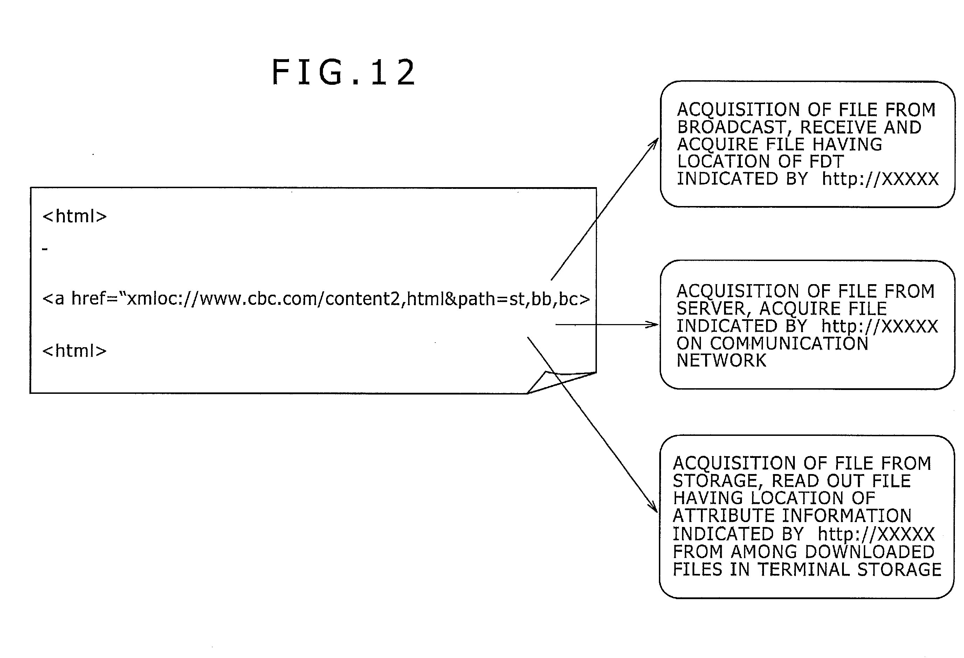

   FIG. 12 is a view illustrating an example of an entry application file.
[FIG. 13]

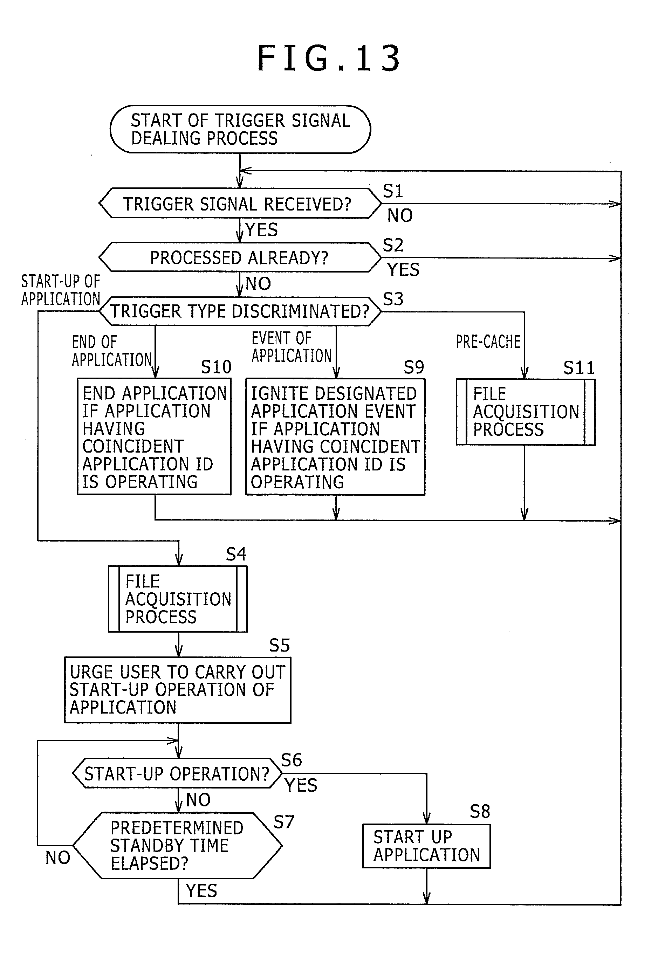

   FIG. 13 is a flow chart illustrating a trigger signal dealing process.
[FIG. 14]

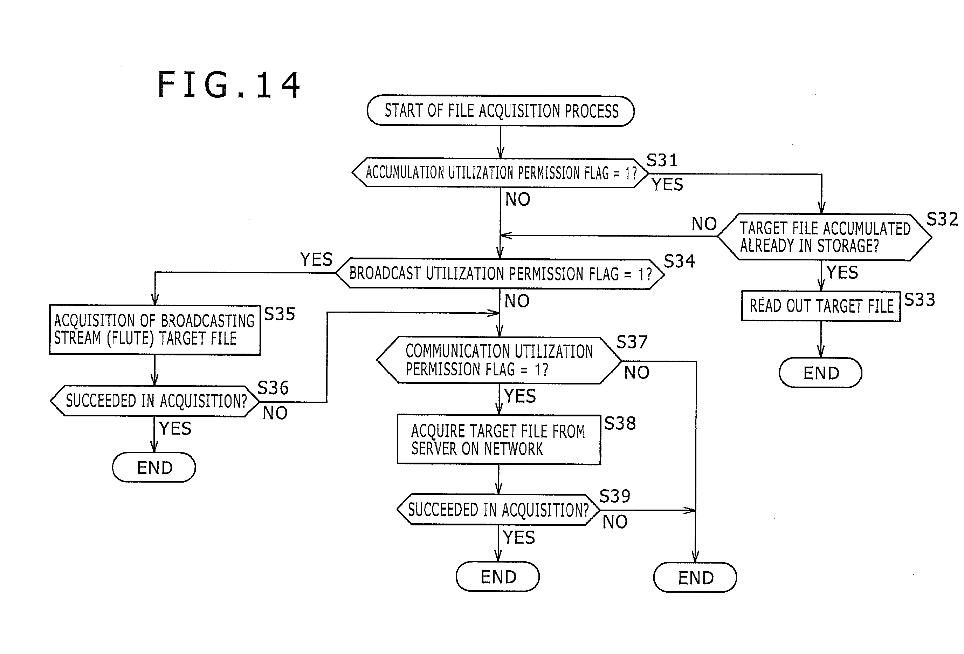

   FIG. 14 is a flow chart illustrating a file acquisition process.
[FIG. 15]

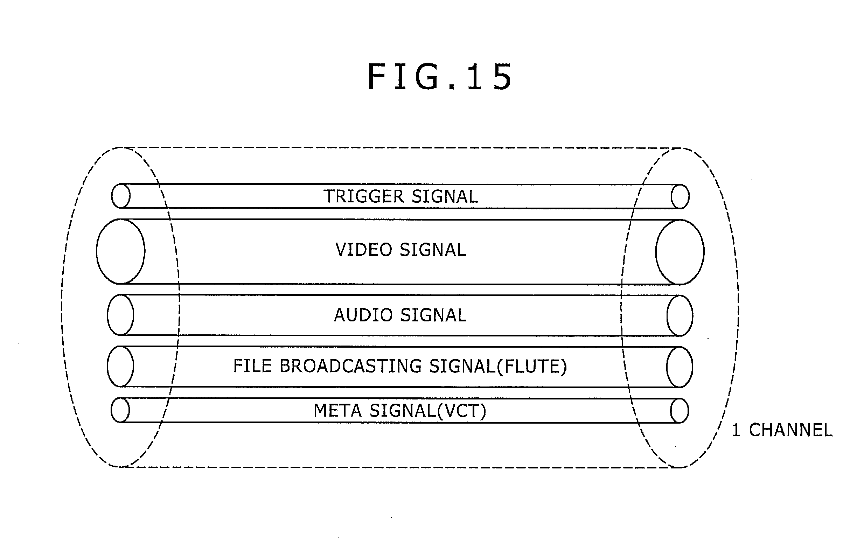

   FIG. 15 is a view illustrating an example of a configuration of a digital television broadcasting signal.
[FIG. 16]

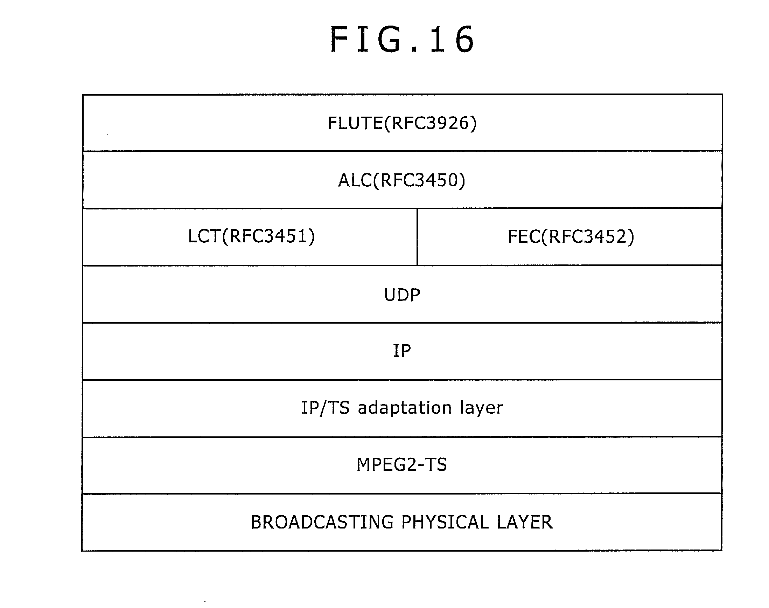

   FIG. 16 is a view illustrating an example of a file transmission protocol stack by FLUTE.
[FIG. 17]

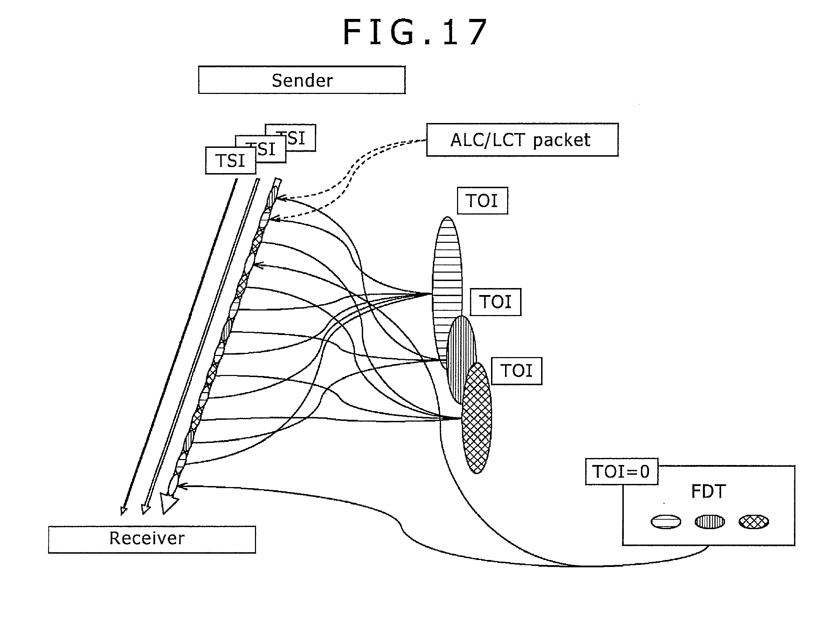

   FIG. 17 is a view illustrating an example of a file transmission method by FLUTE.
[FIG. 18]

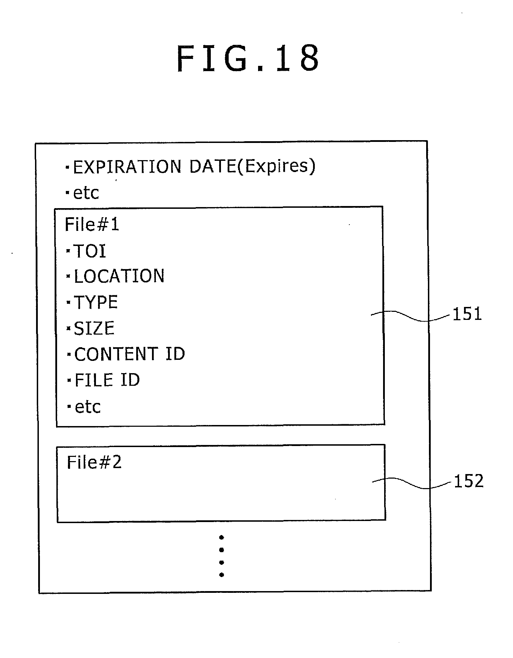

   FIG. 18 is a view illustrating an example of a "FDT."
[FIG. 19]

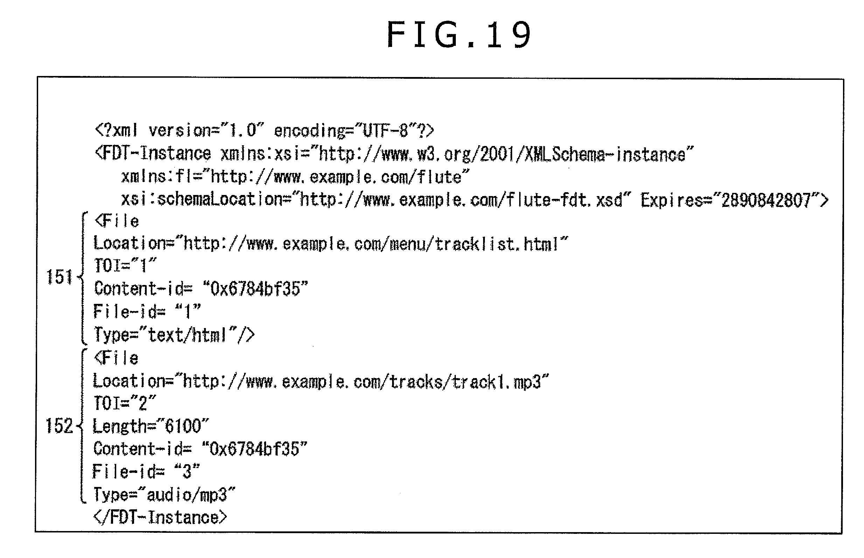

   FIG. 19 is a view illustrating an example in the case where a FDT is described in the XML language.
[FIG. 20]

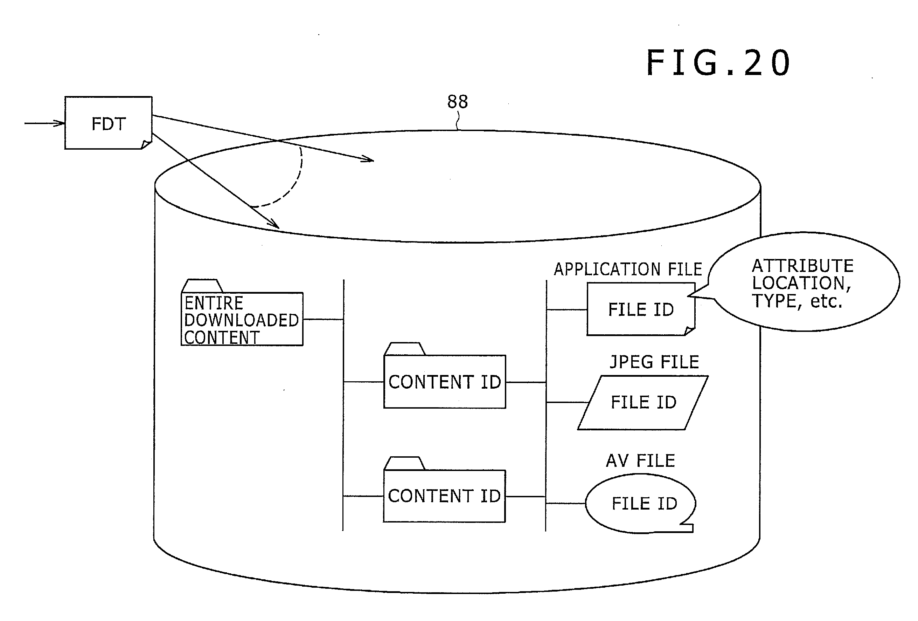

   FIG. 20 is a view illustrating an example of a storage for storing content and files in a hierarchical structure.
[FIG. 21]

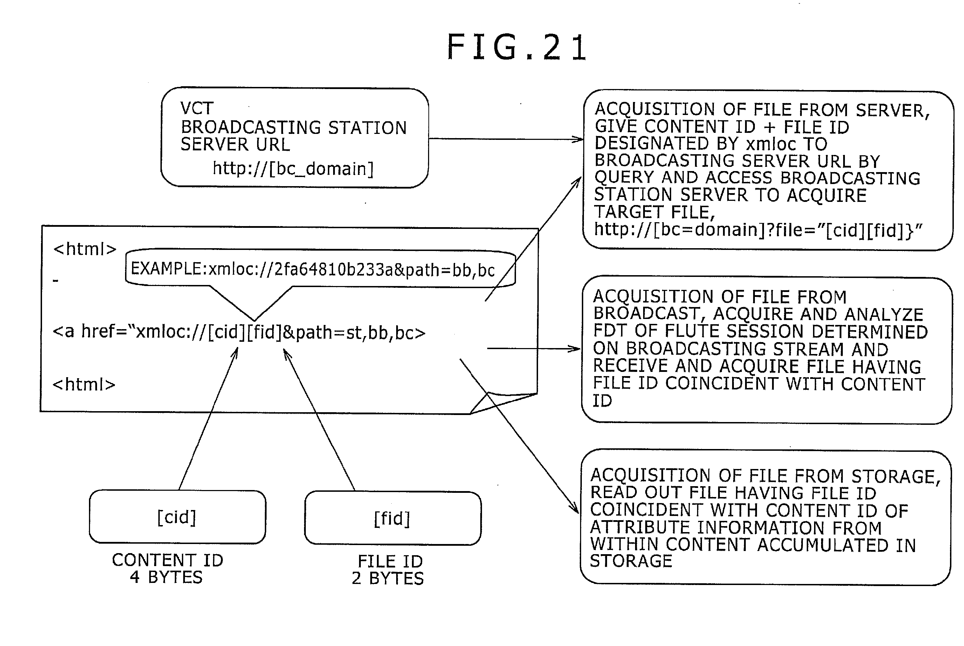

   FIG. 21 is a view illustrating another example of an entry application file.
[FIG. 22]

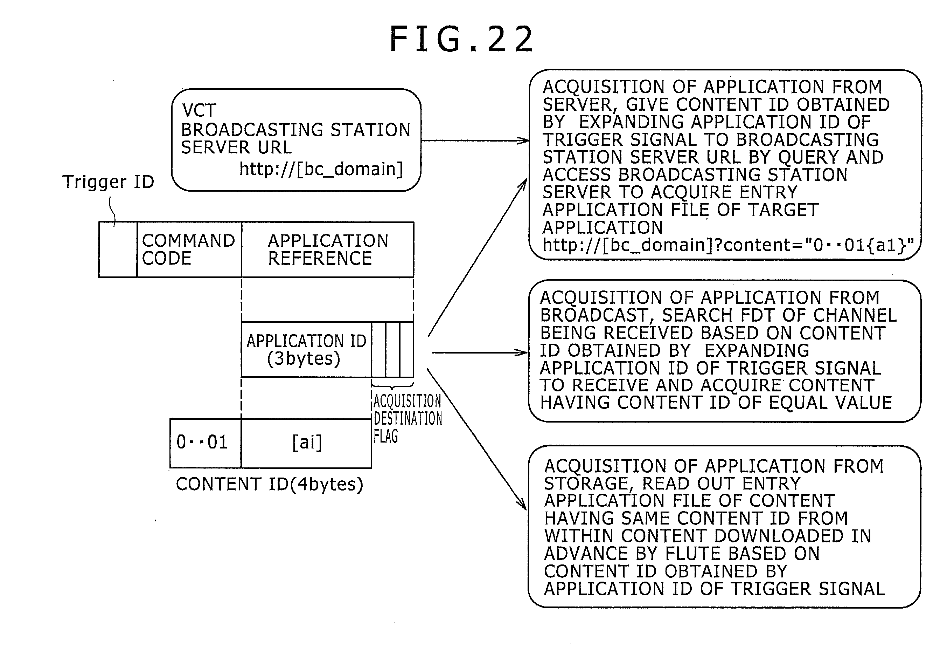

   FIG. 22 is a view illustrating another example of items included in application reference of the trigger signal.
[FIG. 23]

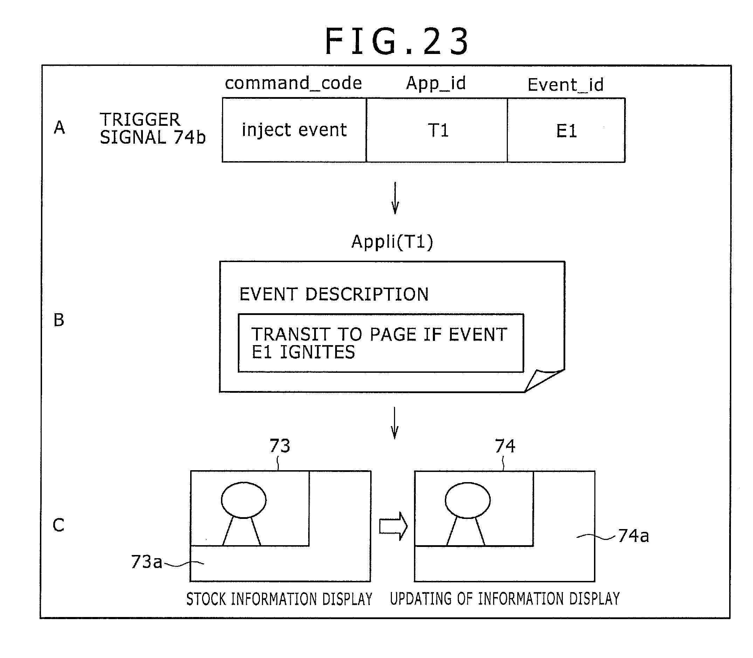

   FIG. 23 is views illustrating a first example of an event executed when a trigger signal is received.
[FIG. 24]

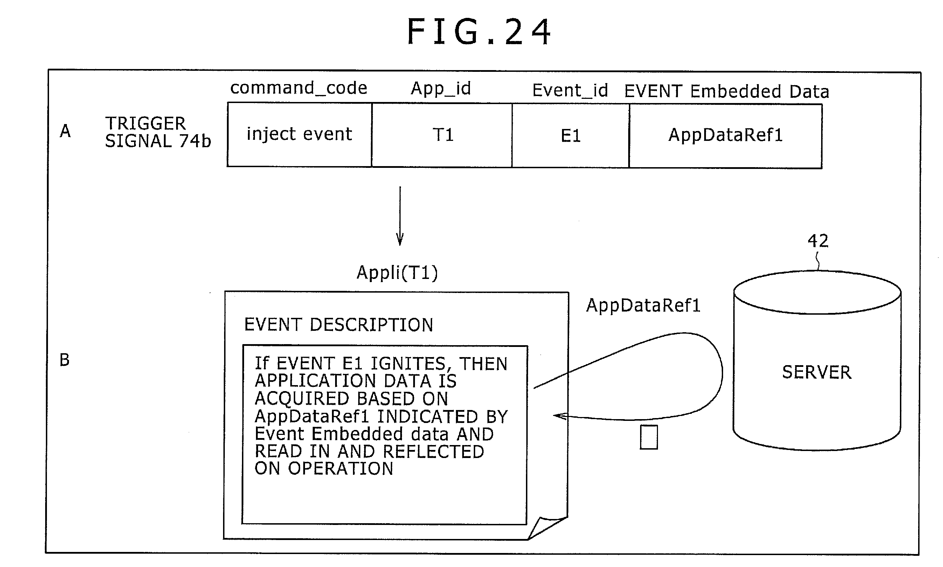

   FIG. 24 is views illustrating a second example of an event executed when a trigger signal is received.
[FIG. 25]

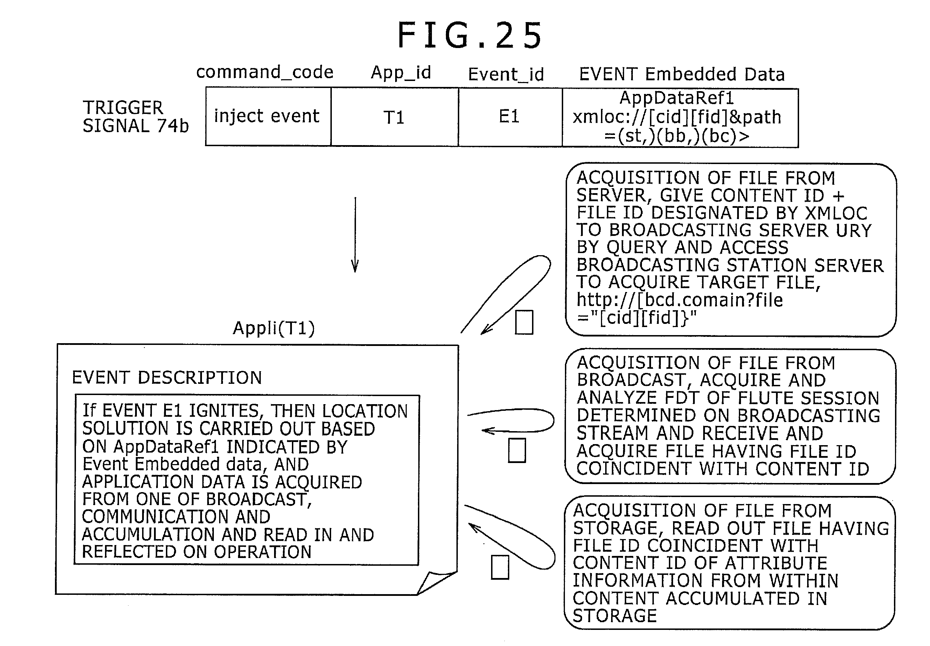

   FIG. 25 is a view illustrating that data are acquired from one of a plurality of acquisition destinations upon execution of an event.
[FIG. 26]

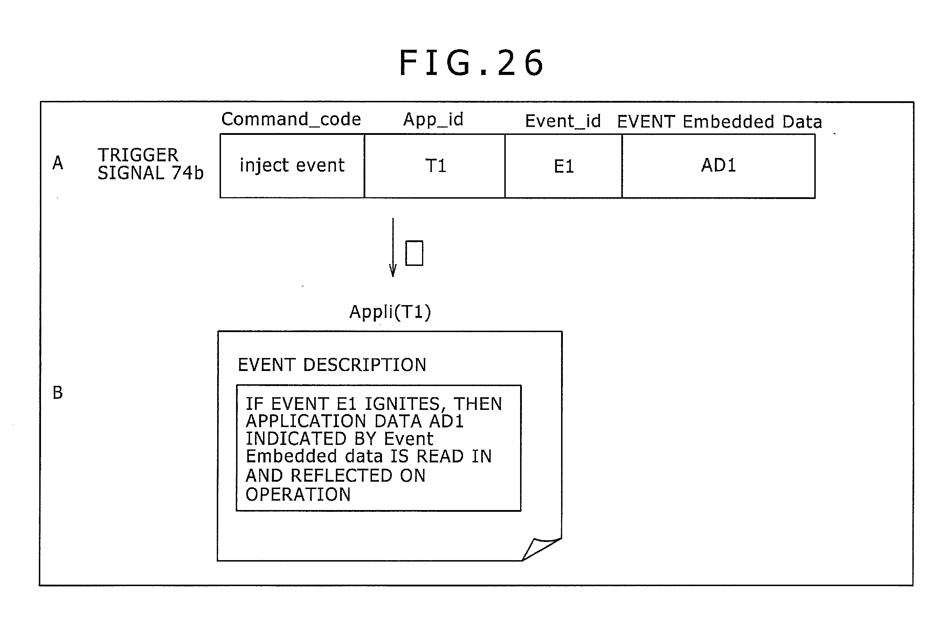

   FIG. 26 is views illustrating a third example of an event executed when a trigger signal is received.
[FIG. 27]

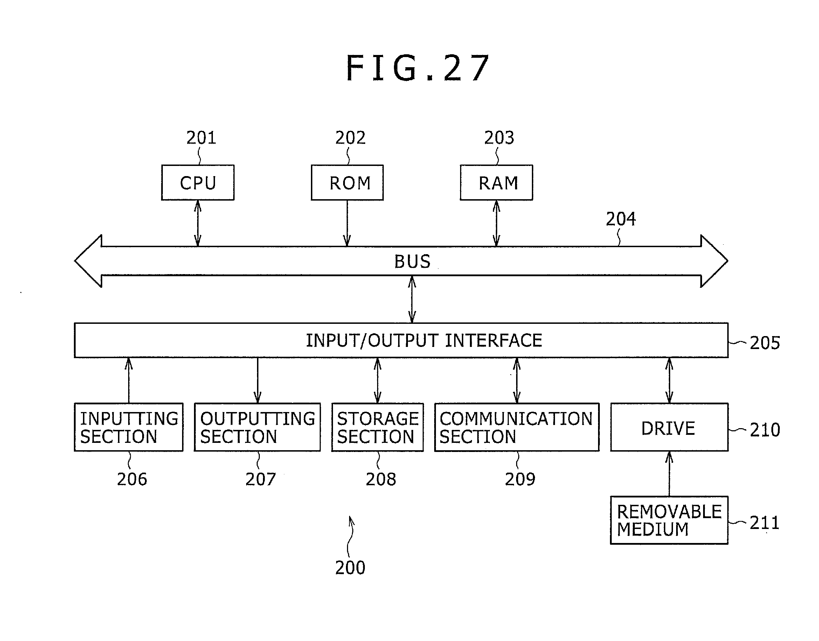

   FIG. 27 is a block diagram showing an example of a configuration of a computer.

### [Description of Embodiments]

### <1. First Embodiment>

### [Example of the Configuration of the Broadcasting System]

FIG. 2 shows a broadcasting system 30 according to a first embodiment. This broadcasting system 30 makes it possible to acquire, for example, in the United States at present, a file using the same namespace irrespective of the acquisition destination of a file acquired in order to implement a service of data broadcasting.

It is to be noted that the present broadcasting system 30 is configured from a broadcasting apparatus 41 and a server 42 provided on the broadcasting station side, and a reception apparatus 60 provided on the receiver side.

The broadcasting apparatus 41 transmits (broadcasts) a digital television broadcasting signal. The digital television broadcasting signal includes AV content which corresponds to a television broadcast and data broadcasting content which corresponds to a service of data broadcasting.

It is to be noted that AV content is configured from a signal necessary for displaying a television program, and data broadcasting content is configured from a file necessary to implement a service of data broadcasting. This is hereinafter described in detail with reference to FIG. 9.

Further, in the broadcasting apparatus 41, a file transmission method by FLUTE is used for transmission of data broadcasting content. The file transmission method by FLUTE is hereinafter described with reference to FIGS. 15 to 19.

Furthermore, the broadcasting apparatus 41 places and transmits a trigger signal into and together with a packet (hereinafter referred to as PCR packet) which includes a PCR (Program Clock Reference) from among TS packets which configure a TS (transport stream) of a digital television broadcasting signal at a predetermined timing.

Here, the trigger signal is configured from information representative of an execution timing of data broadcasting content, information representative of an acquisition destination of the data broadcasting content and so forth. The trigger signal is hereinafter described with reference to FIGS. 5 to 8.

It is to be noted that the trigger signal may be placed into a PCR packet or may be embedded as a watermark into a video signal which corresponds to a digital television broadcasting signal in such a form that a user cannot recognize the trigger signal.

Or, for example, in the case where a moving image configured from a plurality of pictures is broadcast as a digital television broadcasting signal, the trigger signal may be placed into a user definition region (for example, user data of the MPEG2 or the like) defined for each picture.

In the case where the trigger signal is embedded into and transmitted together with a video signal corresponding to a digital television broadcasting signal, the reception apparatus 60 extracts the trigger signal from the video signal. On the other hand, in the case where the trigger signal is placed into and transmitted together with a user definition region of a picture, the reception apparatus 60 extracts the trigger signal from the user definition region.

In the following description, it is assumed for the convenience of description that the trigger signal is placed into and transmitted together with a PCR packet and the reception apparatus 60 extracts the trigger signal from the PCR packet.

The server 42 supplies data broadcasting content and so forth in response to a request from the reception apparatus 60 which accesses the server 42 through the Internet 50.

The reception apparatus 60 receives a digital television broadcasting signal broadcast from the broadcasting apparatus 41 and acquires and outputs a video and an audio of AV content which corresponds to a television program.

On the other hand, in the case where data broadcasting content is included in the received digital television broadcasting signal, the reception apparatus 60 acquires the data broadcasting content from the received digital television broadcasting signal.

Furthermore, the reception apparatus 60 accesses the server 42 through the Internet 50 to acquire data broadcasting content.

Further, the reception apparatus 60 extracts the trigger signal from a PCR packet included in the received digital television broadcasting signal and causes a monitor not shown to display an image implemented from the acquired data broadcasting content based on the extracted trigger signal.

It is to be noted that the reception apparatus 60 may exist as a single apparatus or may be built, for example, in a television receiver or a video recorder. Details of the reception apparatus 60 are hereinafter described with reference to FIG. 4.

### [Outline of the Invention]

FIG. 3 illustrates an example of a case in which the reception apparatus 60 causes a video, which is implemented from data broadcasting content, to be displayed on the monitor not shown based on a trigger signal from the broadcasting apparatus 41.

The reception apparatus 60 receives a digital television broadcasting signal broadcast from the broadcasting apparatus 41, acquires a video 71 of AV content from the received digital television broadcasting signal and causes the monitor not shown to display the video 71.

The reception apparatus 60 causes a video 7.2 including a stock information icon 72a to be displayed in response to acquisition of a trigger signal 72b for displaying the stock information icon 72a selected, for example, when stock price information is to be displayed from a PCR packet of the received digital television broadcasting signal.

Then, in response to a selection operation carried out to select the stock information icon 72a by the user, the reception apparatus 60 causes a video 73 including a stock information display 73a representative of stock prices at present to be displayed.

In the case where the reception apparatus 60 acquires a trigger signal 74b for updating the stock information display 73a to display the latest stock information display 74a from the digital television broadcasting signal being received, the reception apparatus 60 updates the video 73 being displayed to a video 74 which includes the stock information display 74a.

In the case where the reception apparatus 60 acquires a trigger signal 75b for stopping the stock information display 74a from the digital television broadcasting signal being received, it stops the stock information display 74a so that only a video 75 of the AV content is displayed.

When the stock information icon 72a, stock information display 73a or stock information display 74a is to be displayed, the reception apparatus 60 acquires a file (included in the data broadcasting content) necessary to display them from at least one of a digital television broadcasting signal broadcast from the broadcasting apparatus 41, the server 42 and a storage 88 (FIG. 4) built in the reception apparatus 60.

The point of the present invention resides in that the reception apparatus 60 can use the same namespace to acquire a file of an acquisition target irrespective of the acquisition destination without carrying out a complicated process. It is to be noted that details are hereinafter described, for example, with reference to FIGS. 10 to 12.

### [Example of the Configuration of the Reception Apparatus 60]

FIG. 4 shows an example of a configuration of the reception apparatus 60. The reception apparatus 60 is configured from a tuner 81, a demultiplexing section 82, an audio decoder 83, an audio outputting section 84, a video decoder 85, a video outputting section 86, a file reception processing section 87, a storage 88, a trigger processing section 89, an application controlling section 90, an application engine 91, and a communication I/F 92.

The tuner 81 receives and demodulates a digital television broadcasting signal corresponding to a channel selected by the user and outputs a resulting TS to the demultiplexing section 82.

The demultiplexing section 82 demultiplexes the TS inputted thereto from the tuner 81 into an audio coded signal and a video coded signal and supplies them to the audio decoder 83 and the video decoder 85, respectively.

Further, the demultiplexing section 82 extracts a PCR packet including a trigger signal disposed in the TS and outputs the extracted PCR packet to the trigger processing section 89.

It is to be noted that, in the case where the tuner 81 receives a digital television broadcasting signal broadcast for download broadcasting and supplies a corresponding TS to the demultiplexing section 82, the demultiplexing section 82 supplies the TS for downloading broadcasting inputted thereto from the tuner 81 to the file reception processing section 87.

The file reception processing section 87 supplies and stores the TS for download broadcasting supplied thereto from the demultiplexing section 82 to and into the storage 88.

Then, in response to an operation by the user of an operation section not shown of the reception apparatus 60 in order to view AV content corresponding to the digital television broadcasting signal received in download broadcasting, the corresponding AV content is enabled for viewing.

In particular, in response to the user operation, the demultiplexing section 82 reads out the TS for download broadcasting stored in the storage 88 and demultiplexes the TS into an audio encoded signal and a video encoded signal. Further, the demultiplexing section 82 outputs the audio encoded signal and the video encoded signal to the audio decoder 83 and the video decoder 85, respectively.

The audio decoder 83 decodes the audio coded signal inputted thereto and outputs a resulting audio signal to the audio outputting section 84. The audio outputting section 84 outputs the audio signal inputted thereto to a succeeding stage (for example, to a monitor).

The video decoder 85 decodes the video coded signal inputted thereto and outputs a resulting video signal to the video outputting section 86. The video outputting section 86 outputs the video signal inputted thereto from the video decoder 85 to a succeeding stage (for example, to the monitor). Further, the video outputting section 86 combines a video of the data broadcasting content inputted thereto from the application engine 91 and a video signal inputted thereto from the video decoder 85 and outputs a resulting signal to the succeeding stage. It is to be noted that, for example, a HDMI (High-Definition Multimedia Interface) cable can be used for the outputting from the audio outputting section 84 and the video outputting section 86 to the succeeding stage.

As described hereinabove, the file reception processing section 87 supplies and stores a TS for download broadcasting supplied thereto from the demultiplexing section 82 to and into the storage 88.

The storage 88 stores the TS for download broadcasting supplied thereto from the file reception processing section 87 and so forth.

In particular, the storage 88 stores AV content and data broadcasting content included in the digital television broadcasting signal broadcast for download broadcasting as a TS for download broadcasting.

The trigger processing section 89 acquires a trigger signal from a PCR packet from the demultiplexing section 82 and supplies the extracted trigger signal to the application controlling section 90.

The application controlling section 90 controls functioning blocks which configure the reception apparatus 60, for example, based on an operation signal from the operation section not shown and so forth. Further, the application controlling section 90 controls the application engine 91 in response to the trigger signal inputted from the trigger processing section 89 to execute acquisition start-up, event ignition, ending and so forth of an application program for data broadcasting (hereinafter referred to as data broadcasting application).

It is to be noted that the data broadcasting application is a program for implementing a service for data broadcasting interlocked with a television program (for example, a service of causing stock information or the like to be displayed in an interlocked relationship with a television program as shown in FIG. 3 or the like). The data broadcasting application is included as a file in data broadcasting content.

The application engine 91 acquires the data broadcasting application from the server 42 through the communication I/F 92 and the Internet 50 under the control of the application controlling section 90.

Further, in the case where a data broadcasting application is accumulated (stored) already in the storage 88 by download broadcasting, the application engine 91 acquires the data broadcasting application from the storage 88.

Furthermore, the application engine 91 acquires the data broadcasting application from the digital television broadcasting signal from the application controlling section 90. It is to be noted that it is assumed that, to the application engine 91, the (TS of the) received digital television broadcasting signal is supplied from the tuner 81 through the demultiplexing section 82, trigger processing section 89 and application controlling section 90.

The communication I/F 92 establishes a connection to the server 42 through the Internet 50 under the control of the application engine 91.

### [Details of the Trigger Signal]

FIG. 5 illustrates a concept when a trigger signal is placed into and transmitted together with a PCR packet of a TS. As shown in the figure, the trigger signal is not placed into all PCR packets but is placed into a PCR packet only at an appropriate timing for causing the PCR packet to be interlocked with AV content corresponding to the television program.

It is to be noted that, depending upon the substance of the trigger signal, a trigger signal of the same substance may be transmitted by a plural number of times taking a case in which it is not received by the reception apparatus 60 as shown in FIG. 5.

FIG. 6 illustrates an example of a configuration of the trigger signal.

As illustrated in FIG. 6, the trigger signal is configured from a trigger ID, a command code, and an application reference. It is to be noted that the trigger signal is configured including a command-dependent field as occasion demands.

The trigger ID is information for identifying the trigger signal. In the case where a trigger signal of the same substance is transmitted by a plural number of times, the trigger IDs of the trigger signals are same as each other. The command code is a code representing whether the trigger signal is an application start-up trigger signal (which indicates acquisition and start-up of a data broadcasting application), an application ending trigger signal (which indicates ending of a data broadcasting application being executed), an application event trigger signal (which indicates ignition of an event (updating of the display substance or the like) in a data broadcasting application being executed) or a pre-cache trigger signal (which indicates only acquisition of a data broadcasting application).

The application reference is configured from an application ID and an acquisition destination flag. Meanwhile, the command-dependent field includes an application type, application ending time, an event ID, a protocol version, data for execution or the like.

The application ID is information for identifying a data broadcasting application corresponding to the trigger signal and is represented, for example, by a common namespace. The acquisition destination flag represents, in the case where the command code is trigger start-up or pre-cache, an acquisition destination of a data broadcasting application which is determined as an acquisition target. In particular, for example, the acquisition destination flag may be an accumulation utilization permission flag representative of whether the storage 88 is to be determined as an acquisition destination, a broadcast utilization permission flag representative of whether or not a digital television broadcasting signal is to be determined as an acquisition destination or a communication utilization permission flag representative of whether or not the server 12 is to be determined as an acquisition destination.

The accumulation utilization permission flag, broadcast utilization permission flag and communication utilization permission flag have a value of, for example, 0 or 1, and in the case where it is determined as an acquisition destination, the flag is set to 1 but in the case where it is not determined as an acquisition destination, the flag is set to 0. It is to be noted that details of the application ID and the acquisition destination flag are hereinafter described with reference to FIG. 11.

The application type is information indicative of a type (for example, html, java or the like) of the data broadcasting application corresponding to the trigger signal.

The application ending time is information which indicates, in the case where a trigger signal wherein the command code is the application end cannot be received, time at which the data broadcasting application being executed is to be ended.

The event ID is information for identifying, in the case where the command code is the application event, the event. The protocol version is information indicative of a version of the format of the trigger signal. The execution data is information to be used, in the case where the command code is the application event, for ignition (execution) of the event. It is to be noted that the trigger signal does not always include all items described above but includes only necessary ones of the items in response to the timing or the command code.

FIG. 7 illustrates an example of items included in the trigger signal in the case where the command code is the application start-up.

In the case where the command code is the application start-up (execute), the trigger signal includes, for example, as shown in FIG. 7, a trigger ID (Trigger_id) of 8 bits and a command code (command_code) of 8 bits and includes, as the application reference, an application ID (App_id) of 24 bits, an accumulation utilization permission flag (Downloaded_App_flag) of 1 bit and a communication utilization permission flag (Internet_App_flag) of 1 bit.

The trigger signal further includes, as the command-dependent field, an application type (App_type) of 4 bits, a protocol version (Protocol_version) of 8 bits, application ending time (App_expire_date) of 32 bits and so forth as shown in FIG. 7.

It is to be noted that, in the case where the command code is the pre-cache, the application reference thereof includes an application ID of 24 bits, an accumulation utilization flag of 1 bit, a broadcasting utilization permission flag of 1 bit and a communication utilization permission flag of 1 bit similarly as in the case where the command code is the application start-up.

FIG. 8 illustrates an example of items included in the trigger signal in the case where the command code is the application event.

In the case where the command code is the application event (inject event), the trigger signal includes, for example, a trigger ID (Trigger_id) of 8 bits and a command code (command_code) of 8 bits. The trigger signal further includes, for example, a protocol version (Protocol_version) of 8 bits, an application ID (App_id) of 24 bits, an application type (App_type) of 4 bits, an event ID (Event_id) of 8 bits, execution data (Event Embedded Data) of N bits and so forth.

It is to be noted that principally a case in which the command code is the application start-up or the pre-cache is hereinafter described with reference to FIGS. 9 to 22. Further, another case in which the command code is the application event is hereinafter described with reference to FIGS. 23 to 26.

FIG. 9 illustrates an example of AV content which is received as a digital television broadcasting signal by the reception apparatus 60 and data broadcasting content which is used by the reception apparatus 60 when a service of data broadcasting is to be implemented.

The AV content 111 illustrated in A of FIG. 9 is configured from a plurality of files. In the present case, the AV content 111 is configured, for example, from an AV file representative of a video and an audio corresponding to a television program, a metafile representative of a genre of the television program and so forth and a thumbnail JPEG representative of a thumbnail image of the television program.

Meanwhile, the data broadcasting content 112 illustrated in B of FIG. 9 is configured from a plurality of files. In the present case, the data broadcasting content 112 is configured, for example from an entry application file 131 which is executed first as a data broadcasting application when a service of data broadcasting is to be implemented, an application file 132 and another application file 133 which are referred to by the entry application file 131 and executed, a still picture file (GIF or JPEG) and a moving picture file (AV file) which are referred to by the application file 133, and so forth.

FIG. 10 illustrates an example of a case in which the reception apparatus 60 changes a screen display image in such a manner as illustrated in FIG. 3 based on the trigger signal.

As illustrated in FIG. 10, in the case where a trigger signal wherein the command code is the pre-cache (Pre-Cache) is inputted from the trigger processing section 89, the application controlling section 90 controls the application engine 91 to acquire and pre-cache the entry application file 131 (corresponding to appli of FIG. 10) of the data broadcasting content 112.

In particular, for example, this trigger signal includes, in addition to the trigger ID of the trigger signal and the command code representative of the pre-cache, the application ID (application ID) and the acquisition destination flag (in the present case, three flags of the broadcasting utilization permission flag, communication utilization permission flag and accumulation utilization permission flag) as the application reference as illustrated in FIG. 11.

The application ID indicates a schema (character string) "www.ccc.com/content1.html" representative of a common namespace.

Accordingly, the application controlling section 90 determines an acquisition destination of the entry application file 131 designated by the application ID based on the acquisition designation flag included in the trigger signal from the trigger processing section 89 and notifies the application engine 91 of the acquisition destination of the entry application file 131. Further, the application controlling section 90 notifies the application engine 91 of the URL "http://www.ccc/content1.html" obtained by adding "http://" in front of the schema.

The application engine 91 acquires the entry application file 131 from the acquisition destination notified from the application controlling section 90 based on the URL "http://www.ccc/content1.html" notified from the application controlling section 90 under the control of the application controlling section 90 and causes a built-in pre-memory or the like to pre-cache (store) the entry application file 131.

It is to be noted that it is assumed that, in at least one of the server 42, a digital television broadcasting signal broadcast from the broadcasting apparatus 41 and the storage 88, the entry application file 131 is placed in an associated relationship with the URL "http://www.ccc/content1.html" as a common namespace.

Further, in the case where a trigger signal wherein the command code is the application start-up (Execute) is inputted from the trigger processing section 89, the application controlling section 90 controls the application engine 91 to execute the pre-cashed entry application file 131 as illustrated in FIG. 10. Consequently, the application engine 91 executes the entry application file 131 to produce and supply a stock information icon 72a to the video outputting section 86. The video outputting section 86 combines the stock information icon 72a from the application engine 91 and a video signal from the video decoder 85 to cause a video 72 including the stock information icon 72a to be displayed as shown in FIG. 10.

Then, in response to a selection operation carried out to select the stock information icon 72a by the user, the video displayed on the monitor not shown transits thereafter as described hereinabove with reference to FIG. 3.

FIG. 12 illustrates an example of an acquisition program for acquiring a file to be executed in order to implement a service of data broadcasting in an interlocking relationship with AV content.

In particular, for example, FIG. 12 illustrates an example of the entry application file 131 as an acquisition program.

The entry application file 131 is, for example, a HTML document described in the HTML (Hyper Text Makeup Language), and as the execution code for causing the stock information icon 72a to be displayed, <a href="xmloc://www.xxx.com/content2.html&path=st,bb,cc"> is described as illustrated in FIG. 12.

"xmloc://" indicates that the HTML document "content2.html" designated by the URL "http://www.ccc.com/content2.html" can be acquired from at least one of a television broadcasting signal, the storage 88 and the server 42.

Further, next to "&path=," at least one of "st (storage)" representative of the storage 88, "bb (broad band)" representative of the server 42 on the Internet 50 and "bc (broadcast)" representative of a digital television broadcast signal from the broadcasting apparatus 41 is described as an acquisition destination of the HTML document "content2.html."

In the case of FIG. 12, "&path=st,bb,cc" is included, and this indicates that the HTML document "content2.html" can be acquired from any of the storage 88, the server 42 on the Internet 50 and a digital television broadcasting signal.

In particular, for example, in the case where the application engine 91 executes <a href="xmloc://www.ccc.com/content2.html&path=st,bb,bc"> described in such a HTML document as shown in FIG. 12 to acquire the HTML document "content2.html" (for example, for causing a still picture file representative of the stock information icon 72a to be displayed) necessary to display the stock information icon 72a, the application engine 91 acquires the HTML document from any of the storage 88, the server 42 on the Internet 50 and a digital television broadcasting signal.

Since, for example, a URL is adopted as information for designating a HTML document of an acquisition target as illustrated in FIG. 12, the HTML document of the acquisition target can be designated by the URL format irrespective of the acquisition destination of the HTML document.

Accordingly, the necessity to designate a HTML document of an acquisition target in a format which is different, for example, among different acquisition destinations is eliminated. Therefore, in comparison with a case in which a HTML document must be designated in a formation which is different among different acquisition destinations, information for designating a HTML document of an acquisition target in regard to such a HTML document as illustrated in FIG. 12 can be described easily.

### [Trigger Signal Dealing Process]

Now, a trigger signal dealing process which is executed when the reception apparatus 60 receives a trigger signal is described.

FIG. 13 is a flow chart illustrating the trigger signal dealing process. This trigger signal dealing process is executed repetitively while the user is viewing a television program, namely, while a digital television broadcasting signal is received.

At step S1, the trigger processing section 89 waits until a PCR packet which includes a trigger signal is received based on an input from the demultiplexing section 82. Then, when a PCR packet which includes a trigger signal is received, the trigger processing section 89 acquires the trigger signal from the received PCR packet and supplies the trigger signal to the application controlling section 90. Thereafter, the processing is advanced to step S2.

At step S2, the application controlling section 90 decides based on the trigger ID included in the trigger signal from the trigger processing section 89, whether or not processes at steps beginning with step S3 have been executed already for the trigger signal from the trigger processing section 89. If it is decided that the processes at the steps beginning with step S3 have been executed already, then the processing is returned to step S1, whereafter similar processes are repeated. On the contrary, if it is decided that the processes at the steps beginning with step S3 have not been executed for the trigger signal, then the processing is advanced to step S3.

At step S3, the application controlling section 90 decides which one of the application start-up, application event, application end and pre-cache the command code of the trigger signal indicates.

If it is decided at step S3 that the command code of the trigger signal indicates the application start-up, then the processing advances to step S4.

At step S4, the application controlling section 90 carries out, based on the application ID and the acquisition destination flag included in the trigger signal, a file acquisition process of causing the application engine 91 to acquire a data broadcasting application (for example, the entry application file 131 of FIG. 9) designated by the application ID from the acquisition destination determined by the acquisition destination flag. It is to be noted that details of the file acquisition process are described with reference to a flow chart of FIG. 14.

Here, if the data broadcasting application has been acquired and cached already through step S11 hereinafter described by the application engine 91, then the process at step S4 is skipped and the processing is advanced to step S5.

At step S5, the application engine 91 causes, for example, "Execute the application?" or the like to be displayed on the screen under the control of the application controlling section 90 to urge the user to carry out a start-up operation of the data broadcasting application (for example, the entry application file 131). If it is decided at step S6 that a start-up operation is inputted from the user in response to the urging display, then the processing is advanced to step S8. At step S8, the application engine 91 starts up (executes) the data broadcasting application acquired by the file acquisition process at step S4 or S11 under the control of the application controlling section 90. Consequently, for example, the video 72 including the stock information icon 72a is displayed on the monitor not shown. Thereafter, the processing is returned to step S1 so that similar processes are repeated thereafter.

It is to be noted that, if it is decided at step S6 after the urging display at step S5 that no start-up operation is inputted from the user and then it is decided at step S7 that a predetermined period of time elapses while no start-up operation is inputted from the user, then the processing is returned to step S1 so that similar processes are repeated thereafter.

If it is decided at step S3 that the command code of the trigger signal is the application event, then the processing is advanced to step S9. At step S9, only when the application ID of the trigger signal and the application ID of the data broadcasting application during operation coincide with each other, the application controlling section 90 controls the application engine 91 to ignite (execute) an event corresponding to the event ID of the trigger signal in the data broadcasting apparatus during operation. Thereafter, the processing is returned to step S1 so that similar processes are repeated thereafter.

If it is decided at step S3 that the command code of the trigger signal is the application end, then the processing is advanced to step S10. At step S10, the application controlling section 90 controls, only when the application ID of the trigger signal and the application ID of the data broadcasting application during operation coincide with each other, the application engine 91 to end the data broadcasting apparatus during operation. Thereafter, the processing is returned to step S1 so that similar processes are repeated thereafter.

It is to be noted that, even in the case where a trigger signal wherein the command code is the application end is not received, if the time at present reaches the application end time described in the trigger signal when the data broadcasting application during operation is started up, then the data broadcasting application during operation is ended.

If it is decided at step S3 that the command code of the trigger signal is the pre-cache, then the processing is advanced to step S11. At step S11, the application controlling section 90 carries out, based on the application ID and the acquisition destination flag included in the trigger signal, a file acquisition process described hereinabove with reference to FIG. 14. Further, the application controlling section 90 stores the data broadcasting application acquired by the application engine 91 through the file acquisition process into storage means such as a cache memory included in the application engine 91. Thereafter, the processing is returned to step S1 so that similar processes are repeated thereafter.

As in Step S11, if the command code is the pre-cache, then the corresponding data broadcasting application can be acquired before the broadcasting time of the television program to be interlocked. Consequently, simultaneously with the start of the television program to be interlocked, the corresponding data broadcasting application can be executed. The description of the trigger signal dealing process is ended therewith.

### [Details of the File Acquisition Process]

Now, the file acquisition process at step S4 or S11 of FIG. 13 is described with reference to a flow chart of FIG. 14.

At step S31, the application controlling section 90 acquires the application ID included in the application reference of the trigger signal supplied thereto from the trigger processing section 89. In the present case, the application ID indicates a schema "www.ccc.com/content1.html" for designating an acquisition destination of the file.

Then, the application controlling section 90 supplies a URL "http://www.ccc.com/content1.html" obtained by adding "http://" in front of the schema "www.ccc/content1.html" as the acquired application ID to the application engine 91.

Further, at step S31, the application controlling section 90 acquires an accumulation utilization permission flag from among a plurality of acquisition designation flags (accumulation utilization permission flag, communication utilization permission flag and broadcasting utilization permission flag) included in the trigger signal supplied from the trigger processing section 89. Then, the application controlling section 90 decides whether or not the acquired accumulation utilization permission flag is 1. Then, if it is decided that the accumulation utilization permission flag is 1, then the application controlling section 90 notifies the application engine 91 of the storage 88 as an acquisition destination of the file, and then advances the processing to step S32.

At step S32, the application engine 91 decides whether or not a file (hereinafter referred to as target file) designated by the URL (in the case at present, "http://www.ccc/content1.html") from the application controlling section 90 is stored already in the acquisition destination (in the case at present, the storage 88) of the file notified from the application controlling section 90.

Then, if the application engine 91 decides that the target file is accumulated already in the storage 88 which is the acquisition destination of the file, then it advances the processing to step S33, at which it reads out the target file from the storage 88. Then, the file acquisition process is ended. Thereafter, the processing is returned to steps S4 or S11 of FIG. 13.

On the other hand, if the application engine 91 decides at step S32 that the target file is not accumulated as yet in the storage 88 which is the acquisition target of the file, then it advances the processing to step S34. It is to be noted that, also when the application controlling section 90 decides at step S31 that the acquired accumulation utilization permission flag is not 1 (but 0), it advances the processing to step S34.

At step S34, the application controlling section 90 acquires a broadcasting utilization permission flag from a plurality of acquisition destination flags included in the application reference of the trigger signal supplied from the trigger processing section 89. Then, the application controlling section 90 decides whether or not the acquired broadcasting utilization permission flag is 1. If the application controlling section 90 decides that the broadcasting utilization permission flag is 1, then it notifies the application engine 91 of the digital television broadcasting signal as the acquisition destination of the file. Then, the processing is advanced to step S35.

At step S35, the application engine 91 tries to acquire the target file designated by the URL from the application controlling section 90 from the acquisition destination (in the case at present, the digital television broadcasting signal) of the file notified from the application controlling section 90. It is to be noted that it is assumed that, in this instance, the digital television broadcasting signal is supplied to the application engine 91 through the tuner 81, demultiplexing section 82, trigger processing section 89 and application controlling section 90.

At step S36, the application engine 91 decides based on a result of the process at step S35 whether or not the acquisition of the target file results in success. Then, if it is decided that the acquisition of the target file results in success, then the file acquisition process is ended. Thereafter, the processing is returned to step S4 or S11 of FIG. 13.

On the other hand, if the application engine 91 decides at step S36 based on a result of the process at step S35 that the acquisition of the target file does not result in success (results in failure), then it advances the processing to step S37. It is to be noted that, also when the application controlling section 90 decides at step S34 that the acquired broadcasting utilization permission flag is not 1 (is 0), it advances the processing to step S37.

At step S37, the application controlling section 90 acquires a communication utilization permission flag from a plurality of acquisition destination flags included in the application reference of the trigger signal supplied from the trigger processing section 89. Then, the application controlling section 90 decides whether or not the acquired communication utilization permission flag is 1. Then, if the application controlling section 90 decides that the communication utilization permission flag is 1, then it notifies the application engine 91 of the server 42 as the acquisition destination of the file. Then, the processing is advanced to step S38.

It is to be noted that, at the present stage, although it has been tried to acquire the target file from the storage 88 and the digital television broadcasting signal, the trial has resulted in failure already, and only the server 42 remains as the acquisition destination of the target file. Accordingly, in the file acquisition process, the process at step S37 may be omitted to carry out processes at steps beginning with step S38.

At step S38, the application engine 91 tries to acquire the target file designated by the URL from the application controlling section 90 from the acquisition destination (in the case at present, the server 42) of the file notified from the application controlling section 90.

At step S39, the application engine 91 decides based on a result of the process at step S38 whether or not the acquisition of the target file results in success. If the application engine 91 decides that the acquisition of the target file results in success, then the file acquisition process is ended. Thereafter, the processing is returned to step S4 or S11 of FIG. 13.

On the other hand, if the application engine 91 decides at step S39 based on a result of the process at step S38 that the acquisition of the target file does not result in success (results in failure), then it causes the monitor not shown or the like to display that the acquisition of the file results in failure. Then, the file acquisition process is ended. Thereafter, the processing is resumed at step S1 of FIG. 13.

It is to be noted that, also when the application controlling section 90 decides at step S37 that the acquired communication utilization permission flag is not 1 (is 0), it causes the monitor not shown or the like to similarly display that the acquisition of the file results in failure. Then, the file acquisition process is ended. Also in this instance, the processing is resumed at step S1 of FIG. 13 similarly.

As described above, according to the file acquisition process, since acquisition from the storage 88 is carried out in prior to that from the other acquisition destinations (digital television broadcasting signal and server 42), the target file can be acquired more rapidly.

In particular, since the storage 88 from which a target file can be acquired only by reading out the same is determined preferentially as an acquisition destination of the target file, the target file can be acquired more rapidly in comparison with an alternative case in which the target file is acquired by receiving a digital television broadcasting signal or is acquired through accessing to the server 42.

Further, for example, according to the file acquisition process, acquisition from the storage 88 or a digital television broadcasting signal is carried out in prior to acquisition from the server 42. Therefore, such a situation that the server 42 goes down because acquisition requests of target files to the server 42 are concentrated or a like situation can be prevented.

### [Digital Television Broadcasting Signal from the Broadcasting Apparatus 41]

Now, a digital television broadcasting signal broadcast from the broadcasting apparatus 41 is described with reference to FIGS. 15 to 19.

FIG. 15 shows an example of a configuration of a digital television broadcasting signal.

As illustrated in FIG. 15, the digital television broadcasting signal is configured, for each channel, from a trigger signal, a video signal (corresponding to a video of AV content), an audio signal (corresponding to an audio of AV content), a file transmission signal including a target file to be acquired by the file acquisition process and so forth, and, as control information relating to the channel, a meta signal including, for example, a VCT (Virtual Channel Table) and so forth.

It is to be noted that, for the file transmission signal, a file transmission method by FLUTE is used. FIG. 16 illustrates an example of a file transmission protocol stack by a FLUTE.

FIG. 17 illustrates a file transmission method by FLUTE.

FIG. 17 is a view illustrating a data configuration of content transmitted by a session of FLUTE. Data acquired by a session of FLUTE configure such FLUTE session streams as illustrated on the left side in FIG. 17.

With each of the FLUTE session streams, an identifier "TSI (Transport Session Identifier)" for identifying the session of FLUTE is associated, and the individual session streams are identified based on the identifiers "TSI."

Each FLUTE session stream is actually configured from a plurality of files divided in a predetermined size, and an identifier called "TOI (Transport Object Identifier)" is applied to each of the plural files. The plural files can be specified based on the TOI. In the present example, the file whose "TOI" is 0 is a "FDT (File Delivery Table)"; the file whose "TOI" is 1 is a "FILE#1"; the file whose "TOI" is 2 is a "File#2," ....

It is to be noted that each of the plural files is transmitted as ALC (Asynchronous Layered Coding Protocol)/LCT (Layered Coding Transport (Building Block)) packets.

FIG. 18 illustrates an example of the "FDT" representative of a file when the "TOI" is 0.

In the FDT, information about each of the other files (files other than the FDT) which configure the FLUTE session stream is described.

In particular, for example, in the FDT, principally file information 151 about the "FILE#1" in the FLUTE session, file information 152 about the "FILE#2" in the FLUTE session, ... are described as illustrated in FIG. 18.

The file information 151 includes the "TOI," "location," "type," "size," "content ID," "file ID," ... about the "FILE#1." It is to be noted that the "TOI" is information for identifying the file "FILE#1" in the FLUTE session, and actually, a predetermined numerical value is described in the "TOI."

In the file information 151, "location" represents a URL at which the "FILE#1" exists or the like, and "type" represents a file type (type of data) of the "FILE#1." For example, in the case where the "FILE#1" is a file of image data, the "type" is described as "video" or the like, but in the case where the "FILE#1" is a file of sound data, the "type" is described as "audio" or the like.

Further, in the file information 151, "size" represents a file size of "FILE#1"; "content ID" represents an identifier for uniquely identifying content which include "FILE#1"; and "file ID" represents an identifier for uniquely identifying "FILE#1."

It is to be noted that, since the file information 152 is similar to the file information 151, description thereof is omitted.

FIG. 19 illustrates an example in the case where the FDT is described in the XML (Extensible Markup Language) language.

In FIG. 19, for example, as the file information 151 relating to "FILE#1," 'Location="http://www.example.com/menu/tracklist.html"' indicative of the location of "FILE#1," 'TOI="1"' indicative of the TOI of "FILE#1," 'Content-id="0x6784bf35"' indicative of the content ID corresponding to "FILE#1," 'File-id="1"' indicative of the file ID of "FILE#1," 'Type="text/html"/' indicative of the file type of "FILE#1" and so forth are described.

Further, for example, as shown in FIG. 19, as the file information 152 relating to "FILE#2," 'Location="http://www.example.com/tracks/track1.mp3"' indicative of the location of "FILE#1," 'TOI="2"' indicative of the TOI of "FILE#2," 'Length="6100"' indicative of the size of "FILE#2," 'Content-id="0x6784bf35"' indicative of the content ID corresponding to "FILE#2," 'File-id="3"' indicative of the file ID of "FILE#2," 'Type="audio/mp3"' indicative of the file type of "FILE#2" and so forth are described.

When the target file is to be acquired from a digital television broadcasting signal, the application engine 91 specifies the target file of the location coincident with the URL notified from the application controlling section 90 based on the FDT transmitted (broadcast), for example, by a file transmission method by FLUTE.

It is to be noted that, also in download broadcasting, a file transmission method by FLUTE is used. If the reception apparatus 60 receives a digital television broadcasting signal by FLUTE, then files corresponding to an ALC/LCT packet wherein the TOI is higher than 1 ("FILE#1," "FILE#2," and so forth) are stored into the storage 88, for example, in such a hierarchical structure as shown in FIG. 20 based on the file "FDT" corresponding to an ALC/LCT packet of TOI = 0. Also the FDT is stored into the storage 88.

When the application engine 91 acquires the target file from the storage 88, it specifies a target file at a location coincident with the URL notified from the application controlling section 90, for example, based on the FDT stored in the storage 88.

Further, in the file transmission method by FLUTE, a case is supposed wherein download broadcasting of broadcasting a digital television broadcasting signal stored in the storage 88 and reproduced later and real-time broadcasting of broadcasting a digital television broadcasting signal which is utilized on the real time basis are carried out simultaneously. In this instance, a session for the download broadcasting and a session for the real time broadcasting are made separate sessions from each other. In particular, the TSI of the session for the real time broadcasting is set to a fixed value such as 0 while the TSI of the session for download broadcasting is set to an arbitrary value other than 0 so that the sessions may be different from each other.

### <2. Second Embodiment>

While, in the first embodiment, a target file is designated by a URL as illustrated in FIGS. 11 and 12, the designation method of a target file is not limited to this.

In particular, for example, in place of the schema "www.ccc.com/content2.html," a file ID of a target file and a content ID of content including the target file may be described as illustrated in FIG. 21 to designate the target file. It is to be noted that, while, in FIG. 21, the content ID is represented by 4 bytes and the file ID is represented by 2 bytes, the byte numbers of the content ID and the file ID are not limited to them. Further, in FIG. 21, the content ID and the file ID are represented, by example, by hexadecimal numbers and set, for example, to "2fa64810b233a" or the like.

When the target file is to be acquired from the server 42, the application engine 91 accesses the URL 'http://[bc_domain]?file="[cid][fid]"' to acquire the target file. It is to be noted that [bc_domain] represents a domain name of the server 42, "cid" a content ID, and [fid] a file name.

The URL "http://[bc_domain]" of the server 42 is included in the VCT broadcast as a meta signal. Therefore, the application engine 91 extracts the URL "http://[bc_domain]" of the server 42 from the broadcast VCT. Then, the application engine 91 accesses the URL 'http://[bc_domain]?file="[cid][fid]"' obtained based on the extracted "http://[bc_domain]" and the content ID and the file ID described in the HTML document (for example, the 131) illustrated in FIG. 21 to acquire the target file.

In the case where the target file is to be acquired from a digital television broadcasting signal, the application engine 91 acquires a file corresponding to the content ID and the file ID described in the HTML document illustrated in FIG. 21 based on the broadcast FDT as the target file.

In the case where the target file is to be acquired from the storage 88, the application engine 91 acquires (reads out) a file corresponding to the content ID and the file ID described in the HTML document illustrated in FIG. 21 based on the FDT stored in the storage 88 as the target file.

As illustrated in FIG. 21, where a content ID and a file ID are used, a target file can be designated with a smaller number of bytes in comparison with an alternative case in which, for example, the first embodiment (in the case where "www.ccc.com/content2.html" is used) is used.

Further, for example, a content ID and a file ID are mere enumerations of character strings (in the case of FIG. 21, represented in hexadecimal numbers). Therefore, even if the content ID and the file ID leak, there is no possibility that the storage location of the target file may not be known from the leaking content ID and file ID.

It is to be noted that, while, in FIG. 21, the target file is designated based on the content ID and the file ID described in the HTML document, this is similar also with regard to the trigger signal.

In particular, for example, a content ID of 4 bytes, a file ID of 2 bytes and an acquisition destination flag may be included in the application reference of the trigger signal to designate a target file.

Incidentally, since the trigger signal is transmitted by a digital television broadcast or the like, preferably the trigger signal has a smaller data amount.

FIG. 22 illustrates an example of a case in which, in a configuration wherein an application ID of 3 bytes and an acquisition destination flag are included in the application reference of the trigger signal, content including a file to be executed is designated and acquired.

It is to be noted that it is assumed that, in FIG. 22, the application ID is identification information of 3 bytes for merely identifying a data broadcasting application in order to reduce the data amount of the trigger signal.

Referring to FIG. 22, different from the application ID illustrated, for example, in FIG. 7 or 11, the application ID is not configured so as to represent the schema "www.ccc.com/content1.html," and therefore can be represented by 3 bytes smaller in data amount than 24 bytes.

In the case where the trigger signal is used to designate content, the application controlling section 90 produces a content ID wherein lower 3 bytes represent an application ID included in the inputted trigger signal and an upper 1 byte represents type information representative of a type of the content to be acquired as shown in FIG. 22. Then, the application controlling section 90 supplies the content ID to the application engine 91.

Incidentally, in the case at present, all of pieces of content acquired based on the received trigger signal are content used for data broadcasting and are restricted to one in type. Accordingly, the type information of content to be acquired in response to reception of the trigger signal is same among different pieces of content.

Accordingly, it is assumed that, for example, the application controlling section 90 retains type information of content to be acquired in response to reception of the trigger signal in advance in the built-in memory (not shown).

The application controlling section 90 extracts, for example, in response to reception of the trigger signal from the trigger processing section 89, an application ID from the trigger signal. Then, the application controlling section 90 produces a content ID wherein lower 3 bytes represent the extracted application ID and an upper 1 byte represents type information retained in the built-in memory, and supplies the content ID to the application engine 91.

Further, the application controlling section 90 determines an acquisition destination of the content designated by the produced content ID based on the acquisition destination flag included in the trigger signal from the trigger processing section 89 and then notifies the application engine 91 of the acquisition destination.

The application engine 91 acquires content of the content ID same as the content ID from the application controlling section 90 from the acquisition destination notified thereto from the application controlling section 90 based on the FDT of the acquisition destination and so forth.

It is to be noted that, in the case at present, a content ID wherein an upper 1 byte represents type information same as the type information retained in the memory built in the application controlling section 90 and lower 3 bytes represent an application ID is described as the content ID in the FDT stored in the storage 88 and to be broadcast by the broadcasting apparatus 41.

Further, in the server 42, a content ID wherein an upper 1 byte represents type information same as the type information retained in the memory built in the application controlling section 90 and lower 3 bytes represent an application ID is retained as the content ID for identifying the content for data broadcasting retained by the server 42.

Accordingly, for example, when content is to be acquired from the server 42, the application engine 91 accesses, based on the content ID from the application controlling section 90, the URL 'http://[bc_domain]?content="0...01{a})"' to acquire corresponding content. Here, "0...01" represents type information placed in an upper 1 byte of the content ID from the application controlling section 90. Further, "a1" represents the application ID placed in lower 3 bytes of the content ID from the application controlling section 90. It is to be noted that it is assumed that the application engine 91 extracts "http://[bc_domain]" from the VCT broadcast as a meta signal.

On the other hand, for example, in the case where content is to be acquired from a digital television broadcasting signal, the application engine 91 acquires content corresponding to the content ID ("0...01" "a1") from the application controlling section 90 based on the broadcast FDT from the digital television broadcasting signal.

Further, for example, in the case where content is to be acquired from the storage 88, the application engine 91 acquires (reads out) content corresponding to the content ID ("0...01" "a1") from the application controlling section 90 based on the broadcast stored in the storage 88.

Then, the application engine 91 acquires a predetermined file (for example, the entry application file 131 of FIG. 9) from the acquired content (for example, the data broadcasting content 112 of FIG. 9).

In particular, for example, the application engine 91 acquires a file to be executed first from among files which configure the acquired content. It is to be noted that it is assumed that, in the case at present, to the file to be executed first, a file name (for example, index.html or the like) representing that the file is a file to be executed first is applied. Therefore, the application engine 91 acquires and executes the file to be executed first based on the file name of the files which configure the acquired content.

In the first and second embodiments described above, in the case where the command code is the application start-up or the pre-cache, a data broadcasting application is acquired using a common namespace.

### [Case in Which the Command Code Is the Application Event]

Also in the case where the command code is the application event, a common namespace can be used similarly to acquire data to be used for execution of an event.

In the following, an example in the case where the command code is the application event is described with reference to FIGS. 23 to 26.

FIG. 23 illustrates a first example of processing carried out in the case where a trigger signal wherein the command code is the application event is received.

In A of FIG. 23, a trigger signal 74b is illustrated wherein the command code is the application event (inject event), the application ID is identification information T1 for identifying Appli(T1) as a data broadcasting application and the event ID is identification information E1 for identifying an event E1.

In B of FIG. 23, an example of a manner in which Appli(TI) executes the event E1 based on E1 as an event ID included in the trigger signal 74b is illustrated.

In C of FIG. 23, the event E1 wherein a video 73 which includes a stock information display 73a is updated to a video 74 which includes a stock information display 74a is illustrated.

For example, in the case where the application controlling section 90 receives, for example, such a trigger signal 74b as illustrated in A of FIG. 23, it extracts the application ID and the event ID from the trigger signal 74b and supplies them to the application engine 91.

The application engine 91 specifies Appli(T1) corresponding to T1 as the application ID from the application controlling section 90 from among data broadcasting applications started up already.

Then, the application engine 91 causes the specified application Appli(T1) to execute the event E1 corresponding to the event ID from the application controlling section 90 as illustrated in B of FIG. 23.

In particular, for example, the application engine 91 causes Appli(T1) as a data broadcasting application to execute a process of changing the video 73 displayed on the monitor not shown to the video 74 as illustrated in C of FIG. 23.

It is to be noted that, in the case where it is necessary to acquire a file necessary when the video 73 is to be changed to the video 74 from some acquisition destination, the application engine 91 acquires the file in a similar manner as in the case described hereinabove with reference to FIG. 12 or 21.

In particular, it is assumed that, for example, Appli(T1) is configured from a HTML document, and in the description in the HTML corresponding to the event E1 to be executed, a designation of a file necessary for execution of the event E1 and an acquisition destination flag of the file are indicated. In this instance, the application engine 91 acquires the file necessary for execution of the event E1 from the acquisition destination indicated by the acquisition destination flag based on the description in the HTML corresponding to the event E1 to be executed.

Then, the application engine 91 uses the acquired file to execute the event E1 for changing the video 73 to the video 74.

FIG. 24 illustrates a second example of processing carried out in the case where a trigger signal wherein the command code is the application event is received.

In A of FIG. 24, a trigger signal 74b which includes, in addition to a command code, an application ID and an event ID, execution data (Event Embedded Data) which is AppDataRef1. Further, since the command code, application ID and event ID illustrated in A of FIG. 24 are similar to the command code, application ID and event ID illustrated in FIG. 23, respectively, description of them is omitted herein.

It is to be noted that AppDataRef1 represents a common namespace (for example, a URL as a schema, a content ID, a file ID and so forth) necessary to designate a file to be used upon execution of the event E1 and an acquisition destination flag.

In the case at present, the common namespace is included in AppDataRef1. Therefore, the application ID illustrated in FIG. 24 may be identification information for identifying the data broadcasting application but need not be such an application ID as represents also a URL as a common namespace, for example, like the application ID illustrated in FIG. 11.

In B of FIG. 24, an example of a manner is illustrated wherein Appli(TI) executes the event E1 based on E1 as the event ID included in the trigger signal 74b and AppDataRef1 as the execution data.

For example, in the case where the application controlling section 90 receives such a trigger signal 74b, for example, as illustrated in A of FIG. 24, it causes Appli(TI) started up already by the application engine 91 to execute the event E1 corresponding to the received trigger signal 74b.

In particular, for example, the application controlling section 90 extracts T1 as the application ID, E1 as the event ID and AppDataRef1 as the execution data from the received trigger signal 74b.

Then, the application controlling section 90 determines the server 42 as an acquisition destination of a file (application data illustrated in B of FIG. 24) to be used upon execution of the event E1 based on the acquisition destination flag included in extracted AppDataRef1 as illustrated in B of FIG. 24. Then, the application controlling section 90 notifies the application engine 91 of the server 42. Further, the application controlling section 90 notifies the application engine 91 of a namespace included in extracted AppDataRef1, T1 as the extracted application ID and E1 as the extracted event ID.

The application engine 91 acquires a file to be used upon execution of the event E1 from the server 42 which is an acquisition destination notified from the application controlling section 90 based on the namespace from the application controlling section 90. Then, the application engine 91 causes Appli(T1) corresponding to T1 notified from the application controlling section 90 to execute the event E1 corresponding to the event ID notified from the application controlling section 90 using the acquired file.

It is to be noted that, although, in the case where the application engine 91 receives a trigger signal wherein the command code is the application event, a file to be used upon execution of the event E1 is acquired from the server 42, the acquisition destination of the file is not limited to the server 42. In particular, for example, the application engine 91 can use a common namespace to acquire a file specified by the namespace from one of a plurality of acquisition destinations including the server 42 in response to the acquisition destination flag as illustrated in FIG. 25.

FIG. 26 illustrates a third example of processing carried out in the case where a trigger signal wherein the command code is the application event is received.

In A of FIG. 26, a trigger signal 74b which includes, in addition to a command code, an application ID and an event ID, execution data (Event Embedded Data) which is AD1. Further, since the command code, application ID and event ID illustrated in A of FIG. 26 are similar to the command code, application ID and event ID illustrated in FIG. 23, respectively, description of them is omitted herein.

It is to be noted that AD1 represents a file which is used upon execution of the event E1.

In B of FIG. 26, an example of a manner is illustrated wherein Appli(TI) executes the event E1 based on E1 as the event ID included in the trigger signal 74b and AD1 as the execution data.

In the case where the application controlling section 90 receives, for example, such a trigger signal 74b as illustrated in A of FIG. 26, it causes Appli(TI) started up already by the application engine 91 to execute the event E1 corresponding to the received trigger signal 74b.

In particular, for example, the application controlling section 90 detects T1 as the application ID, E1 as the event ID and AD1 as the execution data from the received trigger signal 74b and notifies the application engine 91 of them.

The application engine 91 causes Appli(T1) corresponding to T1 notified from the application controlling section 90 to execute the event E1 corresponding to the event ID notified from the application controlling section 90 using AD1 notified from the application controlling section 90.

### <3. Modifications>

While, in the first and second embodiments, the reception apparatus 60 determines an acquisition destination of a target file based on the acquisition destination flag, the acquisition destination may be determined successively in an order determined in advance to try to acquire a file until the file is acquired from an acquisition destination without using the acquisition destination flag.

In this instance, the necessity to describe an acquisition destination flag in the trigger signal or a HTML document is eliminated, and it is possible to reduce the data amount by an amount of the acquisition destination flag. Therefore, the broadcasting apparatus 41 can transmit a trigger signal of a reduced data amount or the server 42 can transmit a HTML document of a reduced data amount, and consequently, other information can be transmitted by an amount corresponding to the reduced data amount.

Further, in the first and second embodiments, the accumulation utilization permission flag, broadcasting utilization permission flag and communication utilization permission flag are used as the acquisition destination flag. However, for example, as the acquisition destination flag, two flags or four or more flags may be adopted.

Further, in the first and second embodiments, the reception apparatus 60 acquires a target file from an acquisition destination based on a received trigger signal and executes the target file. However, the timing at which a target file is acquired and executed is not limited to the timing at which the trigger signal is received. In particular, the target file may be acquired from the acquisition destination and executed, for example, in response to designation of the target file by the user. Further, for example, in the first and second embodiments, a file to be executed in an interlocking relationship with AV content is acquired as the target file. However, the type of the target file is not limited to this, but any file may be acquired as the target file if the file is acquired in order for the reception apparatus 60 to execute a predetermined process.

Further, in FIGS. 11 and 12, a URL indicative of a namespace of the server 42 is used as information for designating the target file. However, for example, a namespace of a digital television broadcasting signal or a namespace of the storage 88 may be used instead.

It is to be noted that, while the series of processes described above can be executed by hardware, it may otherwise be executed by software. Where the series of processes is executed by software, a program which constructs the software is installed from a program recording medium into a computer incorporated in hardware for exclusive use or, for example, a personal computer for universal use which can execute various functions by installing various programs.

### [Example of Configuration of Computer]

FIG. 27 is a block diagram showing an example of a hardware configuration of a computer which executes the series of processes described hereinabove in accordance with a program.

In the present computer 200, a CPU (Central Processing Unit) 201, a ROM (Read Only Memory) 202 and a RAM (Random Access Memory) 203 are connected to each other by a bus 204.

Further, an input/output interface 205 is connected to the bus 204. To the input/output interface 205, an inputting section 206 configured from a keyboard, a mouse, a microphone and so forth, an outputting section 207 configured from a display unit, a speaker and so forth, a storage section 208 configured from a hard disk, a nonvolatile memory and so forth, a communication section 209 configured from a network interface and so forth, and a drive 210 for driving a removable medium 211 such as a magnetic disk, an optical disk, a magneto-optical disk or a semiconductor memory.

The computer configured in such a manner as described above carries out the series of processes described hereinabove by the CPU 201, for example, loading the program stored in the storage section 208 into the RAM 203 through the input/output interface 205 and the bus 204 and executing the program.

It is to be noted that the program which is executed by the computer may be a program by which the processes are executed in a time series in the order as described in the present specification or may be a program by which the processes are executed in parallel or at a necessary timing such as when the program is called.

Further, the program may be processed by a single computer or may be processed in a distributed manner by a plurality of computers. Further, the program may be transferred to and executed by a computer at a remote place.

Further, in the present specification, the term system is used to represent an entire apparatus composed of a plurality of devices.

It is to be noted that the embodiment of the present invention is not limited to the embodiments described hereinabove but can be changed in various manners without departing from the subject matter of the present invention.

**[Reference Signs List] [0252]**

| | |
|---|---|
| 30 | Broadcasting system |
| 41 | Broadcasting apparatus |
| 42 | Server |
| 60 | Reception apparatus |
| 81 | Tuner |
| 82 | Demultiplexing section |
| 83 | Audio decoder |
| 84 | Audio outputting section |
| 85 | Video decoder |
| 86 | Video outputting section |
| 87 | File reception processing section |
| 88 | Storage |
| 89 | Trigger processing section |
| 90 | Application controlling section 90 |
| 91 | Application engine |
| 92 | Communication I/F |

## Claims

1. A reception apparatus which receives data, comprising:
determination means for determining an acquisition destination from which a file to be acquired by the reception apparatus is to be acquired in accordance with an order determined in advance from among a plurality of storage media in which the file is stored;
acquisition means for acquiring the file from the acquisition destination based on the same file acquisition information which is file acquisition information for use for acquiring the file in the storage medium and is common to the plural storage media; and
execution means for executing the acquired file.

2. The reception apparatus according to claim 1, wherein the determination means newly determines the acquisition destination in accordance with the order in response to failure in acquisition of the file from the acquisition destination by the acquisition means.

3. The reception apparatus according to claim 2, wherein the determination means determines the acquisition destination in accordance with the order in which a priority rank of a server which is connected through a network to the reception apparatus and is the acquisition destination is lower than that of any other storage medium from among the plural storage media which include at least the server as the storage medium.

4. The reception apparatus according to claim 2, wherein the determination means determines the acquisition destination in accordance with the order in which a priority rank of an accumulation storage section which the reception apparatus has and which has the file accumulated therein already and is the acquisition destination is higher than that of any other storage medium from among the plural storage media which include at least the accumulation storage section as the storage medium.

5. The reception apparatus according to claim 1, wherein the determination means determines the acquisition destination from among the plural storage media based on acquisition destination information which indicates the acquisition destination.

6. The reception apparatus according to claim 1, wherein the acquisition means acquires the file from the acquisition destination based on the file acquisition information which is configured at least from content identification information for identifying content configured from the file and file identification information for identifying the file managed for each piece of the content.

7. The reception apparatus according to claim 1, wherein the acquisition means
acquires content, which is configured from the file, from the acquisition destination based on the file acquisition information configured at least from content identification information for identifying the content; and
acquires the file to be executed from the acquired content.

8. The reception apparatus according to claim 1, wherein the plural storage media include a server connected through a network to the reception apparatus as the storage medium; and
the acquisition means acquires the file from the acquisition destination using a URL (Uniform Resource Locator) indicating a position of the file stored in the server as the file acquisition information.

9. The reception apparatus according to claim 1, further comprising:
extraction means for extracting a trigger signal which includes at least acquisition destination information indicative of the acquisition destination and the file acquisition information from the AV content; and
wherein
the determination means determines the acquisition destination from among the plural storage media based on the acquisition destination information included in the extracted trigger signal; and
the acquisition means acquires the file from the acquisition destination based on the file acquisition information included in the extracted trigger signal.

10. The reception apparatus according to claim 1, further comprising:
extraction means for extracting, from a program which is executed when the file is to be acquired and in which acquisition destination information indicative of the acquisition destination and the file acquisition information are described, the acquisition destination information and the file acquisition information; and wherein
the determination means determines the acquisition destination from among the plural storage media based on the extracted acquisition destination information; and
the acquisition means acquires the file from the acquisition destination based on the extracted file acquisition information.

11. The reception apparatus according to claim 1, wherein the determination means determines, as a file to be acquired by the reception apparatus which receives AV content, an acquisition destination from which the file is to be acquired in accordance with the order determined in advance from among the plural storage media which store a file to be executed in a linked relationship with progress of the AV content.

12. A reception method for a reception apparatus which receives data, comprising steps executed by the reception apparatus and including:
a decision step of determining an acquisition destination from which a file to be acquired by the reception apparatus is to be acquired in accordance with an order determined in advance from among a plurality of storage media in which the file is stored;
an acquisition step of acquiring the file from the acquisition destination based on the same file acquisition information which is file acquisition information for use for acquiring the file in the storage medium and is common to the plural storage media; and
an execution step of executing the acquired file.

13. A program for causing a computer for controlling a reception apparatus for receiving data to function as:
determination means for determining an acquisition destination from which a file to be acquired by the reception apparatus is to be acquired in accordance with an order determined in advance from among a plurality of storage media in which the file is stored;
acquisition means for acquiring the file from the acquisition destination based on the same file acquisition information which is file acquisition information for use for acquiring the file in the storage medium and is common to the plural storage media; and
execution means for executing the acquired file.

14. A transmission apparatus which transmits AV content, comprising:
transmission means for placing and transmitting a trigger signal relating to a file to be executed by a reception apparatus into and together with the AV content in a linked relationship with the progress of the AV content; and wherein
the trigger signal includes at least acquisition destination information indicative of an acquisition destination from which the file is to be acquired from among a plurality of storage media which store the file therein and the same file acquisition information which is used for acquiring the file in the storage medium and is common to the plural storage media.

15. The transmission apparatus according to claim 14, wherein the trigger signal includes the file acquisition information configured at least from content identification information for identifying content configured from the file and the acquisition destination information.

16. The transmission apparatus according to claim 14, wherein the trigger signal includes the file acquisition information configured at least from content identification information for identifying content configured from the file and file identification information for identifying the file managed for each piece of the content and the acquisition destination information.

17. The transmission apparatus according to claim 14, wherein the plural storage media include a server connected through a network to the reception apparatus as the storage medium; and
the trigger signal includes a URL which indicates a position of the file stored in the server as the file acquisition information.

18. A transmission method for a transmission apparatus which transmits AV content, comprising steps executed by the transmission apparatus and including:
a transmission step of placing and transmitting a trigger signal relating to a file to be executed by a reception apparatus into and together with the AV content in a linked relationship with the progress of the AV content; and wherein
the trigger signal includes at least acquisition destination information indicative of an acquisition destination from which the file is to be acquired from among a plurality of storage media which store the file therein and the same file acquisition information which is used for acquiring the file in the storage medium and is common to the plural storage media.

19. A program for causing a computer which controls a transmission apparatus which transmits AV content to function as
transmission means for placing and transmitting a trigger signal relating to a file to be executed by a reception apparatus into and together with the AV content in a linked relationship with the progress of the AV content; and wherein
the trigger signal includes at least acquisition destination information indicative of an acquisition destination from which the file is to be acquired from among a plurality of storage media which store the file therein and the same file acquisition information which is used for acquiring the file in the storage medium and is common to the plural storage media.

20. A broadcasting system configured from a transmission apparatus for transmitting AV content and a reception apparatus for receiving the transmitted AV content, wherein
the transmission apparatus includes:
transmission means for placing and transmitting a trigger signal relating to a file to be executed by a reception apparatus into and together with the AV content in a linked relationship with the progress of the AV content; and wherein
the trigger signal includes at least acquisition destination information indicative of an acquisition destination from which the file is to be acquired from among a plurality of storage media which store the file therein and the same file acquisition information which is used for acquiring the file in the storage medium and is common to the plural storage media; and
the reception apparatus includes:
extraction means for extracting the trigger signal which includes at least the acquisition destination information and the file acquisition information from within the AV content;
determination means for determining the acquisition destination from among the plural storage media based on the acquisition destination information included in the extracted trigger signal;
acquisition means for acquiring the file from the acquisition destination based on the file acquisition information included in the extracted trigger signal; and
execution means for executing the acquired file.
